# EUROPEAN PATENT SPECIFICATION

(11) **EP 1 855 986 B1**
(45) Date of publication and mention of the grant of the patent: **22.06.2011**
(21) Application number: 06736143.6
(22) Date of filing: 23.02.2006
(51) Int. Cl.: B81B 7/04, B81B 3/00, G09G 3/36, G02B 6/00, G02B 26/08

(54) **METHODS AND APPARATUS FOR SPATIAL LIGHT MODULATION**
VERFAHREN UND VORRICHTUNG FÜR RÄUMLICHE LICHTMODULATION
PROCEDES ET APPAREIL PERMETTANT DE MODULER UNE LUMIERE SPATIALE

(30) Priority: 23.02.2005 US 655827 P; 29.04.2005 US 676053 P; 02.09.2005 US 218690
(43) Date of publication of application: 21.11.2007
(73) Proprietor: Pixtronix Inc., Andover, MA 01810 (US)
(72) Inventor: HAGOOD, Nesbitt, W., Wellesley, Massachusetts 02482 (US); BARTON, Roger, Andover, Massachusetts 01810-2817 (US)
(74) Representative: Boyce, Conor
(86) International application number: PCT/US2006/006761
(87) International publication number: WO 2006/091904

(56) References cited:
- EP-A- 1 426 190
- WO-A-98/04950
- GB-A- 2 071 896
- GB-A- 2 071 896
- GB-A- 2 101 388
- GB-A- 2 101 388
- US-A1- 2003 043 157
- US-A1- 2003 085 867
- US-B1- 6 498 685

## Description

### Field of the Invention

In general, the invention relates to the field of spatial light modulation, in particular, the invention relates to displays having improved backlights.

### Background of the Invention

Displays built from mechanical light modulators are an attractive alternative to displays based on liquid crystal technology. Mechanical light modulators are fast enough to display video content with good viewing angles and with a wide range of color and grey scale. Mechanical light modulators have been successful in projection display applications. Backlit displays using mechanical light modulators have not yet demonstrated sufficiently attractive combinations of brightness and low power. When operated in transmissive mode many mechanical light modulators, with aperture ratios in the range of 10 and 20%, are only capable of delivering 10 to 20% of available light from the backlight to the viewer for the production of an image. Combining the mechanical apertures with color filters reduces the optical efficiency to about 5%, i.e., no better than the efficiencies available in current color liquid crystal displays. There is a need for a low-powered display having increased luminous efficiency.

US 2003/043147 discloses a display comprising a first reflective surface, a second reflective surface at least partially facing the first reflective surface and reflecting light towards the first reflective surface, the first and second surfaces forming an optical cavity, a light guide and an array of light modulators.

### Summary of the Invention

The present invention provides a display characterized according to claim 1.

The devices and methods described herein provide for mechanical light modulators having improved luminous efficiency, making mechanical actuators attractive for use in portable and large area displays. In some cases, the transmittance or optical efficiency of mechanical modulators coupled to backlights can be improved to the 40 to 60% level, or 10 times more efficient than what is typical in a liquid crystal display. In addition, the devices and methods described herein can be incorporated into small-size, high resolution displays, regardless of the light modulation mechanism, to improve the brightness of the displays and to reduce the power requirements in a display application.

The light modulators described herein make possible portable video displays that can be both bright and low power. The light modulators can be switched fast enough to provide color images using time sequential color techniques, instead of relying on color filters. The displays can be built using as few as three functional layers to form both a mechanical shutter assembly and the electrical connections necessary for array addressing.

In one aspect, the invention relates to a spatial light modulator which includes a first reflective surface and a second reflective surface. The first reflective surface defines a number of light-transmissive regions, such as apertures, filters, or liquid crystal components. The second reflective surface at least partially faces the first reflective surface and reflects light towards the light-transmissive regions defmed by the first reflective surface. The reflective surfaces may be mirrors, dielectric mirrors, or thin functional films. In one embodiment the first reflective surface is parallel or substantially parallel to the second reflective surface. In another embodiment, the reflective surfaces are at least partially transverse to one another. The space between the first and second reflective surfaces defines the area of a substantially transparent optical cavity.

In one embodiment, the spatial light modulator includes an array of light modulators for selectively obstructing the light-transmissive regions. Obstructing may include, without limitation, partially or completely blocking, reflecting, deflecting, absorbing, or otherwise preventing light from reaching an intended viewer of the spatial light modulator. In one embodiment, the array of light modulators includes the first reflective surface. One feature of the light modulating elements in the array of light modulators is that they are individually controllable. In one embodiment, the light modulating elements may be MEMS-based shutter assemblies, and optionally may be bistable or deformable shutters. The shutter assemblies include shutters that, in one implementation, are coated with a first film to absorb light striking the shutter from one direction and coated with a second film to reflect light striking the shutter from another direction. In one embodiment, the shutters move in a plane such that in one position the shutters substantially obstruct passage of light through corresponding light-transmissive regions, and in a second position, they allow light to pass through the light-transmissive regions. In another embodiment, the shutters move at least partially out of a plane defined by the array of shutter assemblies in which they are included. While substantially in the plane, the shutters obstruct passage of light through corresponding light-transmissive regions. While substantially out of the plane, the shutters allow light to pass through the light-transmissive regions. In another embodiment, the array of light modulators includes a plurality of liquid crystal cells.

In another embodiment, the spatial light modulator includes a light guide for distributing light throughout the light cavity. The reflective surfaces may be disposed directly on the front and rear surfaces of the light guide. Alternatively, the front reflective surface may be disposed on a separate substrate on which the array of light modulators is disposed. Similarly, the second reflective surface may be coupled directly to the rear side of the light guide, or it may be attached to a third surface.

The substrate on which the array of light modulators is formed may be transparent or opaque. For opaque substrates, apertures are etched through the substrate to form light-transmissive regions. The substrate may be directly coupled to the light guide, or it may be separated from the light guide with one or more spacers or supports. In still a further embodiment, the spatial light modulator includes a diffuser or brightness enhancing film. The spatial light modulator may also include a light source, such as a light emitting diode.

In another aspect, the invention relates to a method of forming an image using the display of claim 1. The method includes introducing light into a reflective optical cavity. The reflective cavity includes a plurality of light-transmissive regions through which light can escape the reflective optical cavity. The method further includes forming an image by allowing the introduced light to escape the reflective optical cavity through at least one of the light-transmissive regions. In one embodiment, the escape of light is regulated by an array of light modulators that either obstruct light passing through the light-transmissive regions, or allow it to pass. In another embodiment, the method includes forming a color image by alternately illuminating a plurality of different colored light sources. In a further embodiment, the method includes reflecting at least a portion of ambient light striking unobstructed light-transmissive regions.

### Brief Description of the Figures

The system and methods may be better understood from the following illustrative description with reference to the following drawings in which:
Figure 1A is an isometric conceptual view of an array of light modulators, according to an illustrative embodiment of the invention;
Figure 1B is a cross-sectional view of a shutter assembly included in the array of light modulators of Figure 1A, according to an illustrative embodiment of the invention;
Figure 1C is an isometric view of the shutter layer of the shutter assembly of Figure 1B, according to an illustrative embodiment of the invention;
Figure 1D is a top view of the various functional layers of a light modulation array, such as the light modulation array of Figure 1A;
Figure 2 is a cross-sectional view of an optical cavity for use in a spatial light modulator, according to an illustrative embodiment of the invention;
Figures 3A-3D are cross-sectional views of alternative shutter assembly designs, according to illustrative embodiments of the invention;
Figure 4 is a cross-sectional view of a shutter assembly having a first coated shutter, according to an illustrative embodiment of the invention;
Figure 5 is a cross-sectional view of a shutter assembly having a second coated shutter, according to an illustrative embodiment of the invention;
Figure 6 is a cross-sectional view of a shutter assembly having an elastic actuator for use in the light modulation array, according to an illustrative embodiment of the invention;
Figure 7 is a cross-sectional view of a shutter assembly having a deforming shutter for use in the light modulation array, according to an illustrative embodiment of the invention;
Figures 8A-8B are cross-sectional views of the shutter assemblies built on opaque substrates for use in the light modulation array, according to an illustrative embodiment of the invention;
Figure 9 is a cross-sectional view of a liquid crystal-based spatial light modulator, according to an illustrative embodiment of the invention;
Figure 10 is a cross-sectional view of a first shutter-based spatial light modulator, according to an illustrative embodiment of the invention;
Figure 11 is a cross-sectional view of a second shutter-based spatial light modulator, according to the illustrative embodiment of the invention;
Figures 12A-12D are cross-sectional views of third, fourth, fifth, and sixth illustrative shutter-based spatial light modulators, according to an embodiments of the invention;
Figure 13 is a cross-sectional view of a seventh shutter-based spatial light modulator, according to an illustrative embodiment of the invention;
Figures 14A and 14B are cross-sectional views of two additional spatial light modulators, according to an illustrative embodiment of the invention;
Figure 15 is a cross-sectional view of an additional shutter assembly, according to an illustrative embodiment of the invention;
Figure 16 is a cross-sectional view of still a further spatial light modulator, according to an illustrative embodiment of the invention;
Figure 17 is an illustrative transflective shutter assembly, according to an embodiment of the invention;
Figure 18 is a second illustrative transflective shutter assembly, according to an embodiment of the invention;
Figure 19 is a cross-sectional view of a front reflective shutter assembly, according to an illustrative embodiment of the invention; and
Figure 20 is an isometric view of a larger scale display formed from an array of light modulation arrays, according to an illustrative embodiment of the invention;
Figure 21A is a schematic diagram of an active control matrix 2100 suitable for inclusion in the display apparatus 100 for addressing an array of pixels;
Figure 21B Figure an isometric view of a portion of the array of pixels including the control matrix of Figure 21A.
Figure 22 is a conceptual isometric view of a display apparatus, according to an illustrative embodiment of the invention;
Figure 23 is a partial cross-sectional view of an individual shutter and pixel assembly of the display apparatus of Figure 22, according to an illustrative embodiment of the invention;
Figures 24A and 24B are top views of a shutter layer of the display apparatus of Figures 22 and 23, at various states of actuation, according to an illustrative embodiment of the invention;
Figure 25 is an isometric view, similar to that of Figure 22, of the shutter layer of the display apparatus of Figures 22-24B, showing a conceptual tiling diagram for arranging the shutter assemblies in the display apparatus, according to an illustrative embodiment of the invention;
Figures 26A-26D are partial cross-sectional views of the concentrator array layer of the display apparatus of Figures 22-25, at various stages of fabrication, according to an illustrative embodiment of the invention;
Figures 27A-27C are partial cross-sectional views of the concentrator array layer of the display apparatus of Figures 22-25, at various stages of fabrication, according to another illustrative embodiment of the invention;
Figure 28 is a partial isometric cross-sectional view, of an individual shutter and pixel assembly of the display apparatus of Figures 22-27C, according to an illustrative embodiment of the invention;
Figure 29 is a partial isometric cross-sectional view of an individual shutter and pixel assembly of the display apparatus of Figures 22-28 implemented as a transflective-type display, according to an illustrative embodiment of the invention; and
Figure 30 is a partial isometric cross-sectional view, of an individual shutter and pixel assembly of the display apparatus of Figures 22-28 implemented as a transmissive-type display, according to an illustrative embodiment of the invention.

### Description Of Certain Illustrative Embodiments

To provide an overall understanding of the invention, certain illustrative embodiments will now be described, including apparatus and methods for spatially modulating light. However, it will be understood by one of ordinary skill in the art that the systems and methods described herein may be adapted and modified as is appropriate for the application being addressed and that the systems and methods described herein may be employed in other suitable applications, and that such other additions and modifications will not depart from the scope hereof.

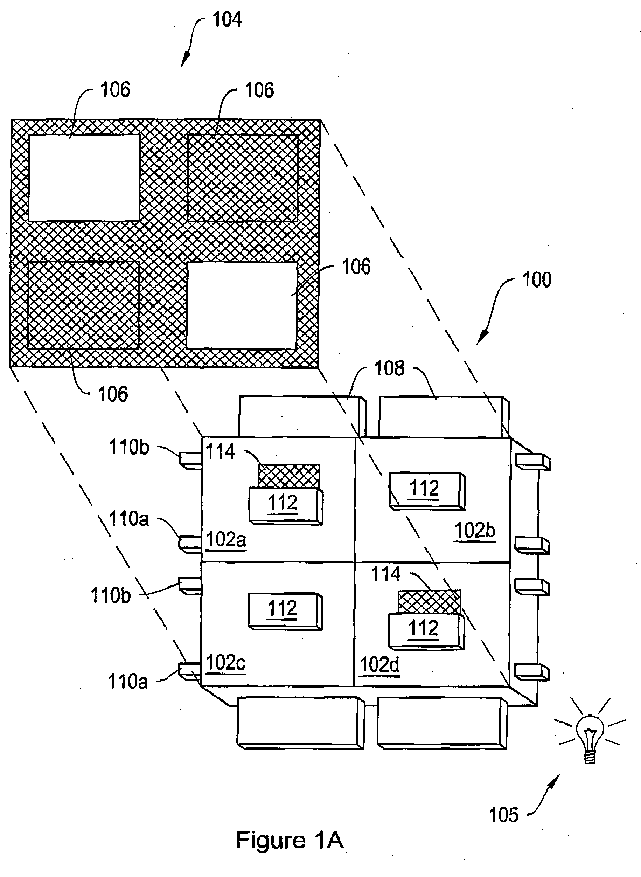

Figure 1A is an isometric conceptual view of an array 100 of light modulators (also referred to as a "light modulation array 100"), according to an illustrative embodiment of the invention. The light modulation array 100 includes a plurality of shutter assemblies 102a-102d (generally "shutter assemblies 102") arranged in rows and columns. In general, a shutter assembly 102 has two states, open and closed (although partial openings can be employed to impart grey scale). Shutter assemblies 102a and 102d are in the open state, allowing light to pass. Shutter assemblies 102b and 102c are in the closed state, obstructing the passage of light. By selectively setting the states of the shutter assemblies 102a-102d, the light modulation array 100 can be utilized to form an image 104 for a projection or backlit display, illuminated by lamp 105. In the light modulation array 100, each shutter assembly corresponds to a pixel 106 in the image 104. In alternative implementations, a light modulation array includes three color-specific shutter assemblies for each pixel. By selectively opening one or more of the color-specific shutter assemblies corresponding to the pixel, the shutter assembly can generate a color pixel in the image.

The state of each shutter assembly 102 can be controlled using a passive matrix addressing scheme. Each shutter assembly 102 is controlled by a column electrode 108 and two row electrodes 110a (a "row open electrode") and 110b (a "row close electrode"). In the light modulation array 100, all shutter assemblies 102 in a given column share a single column electrode 108. All shutter assemblies in a row share a common row open electrode 110a and a common row close electrode 110b. An active matrix addressing scheme is also possible. Active matrix addressing (in which pixel and switching voltages are controlled by means of a thin film transistor array) is useful in situations in which the applied voltage must be maintained in a stable fashion throughout the period of a video frame. An implementation with active matrix addressing can be constructed with only one row electrode per pixel.

In the passive matrix addressing scheme, to change the state of a shutter assembly 102 from a closed state to an open state, i.e., to open the shutter assembly 102, the light modulation array 100 applies a potential to the column electrode 108 corresponding to the column of the light modulation array 100 in which the shutter assembly 102 is located and applies a second potential, in some cases having an opposite polarity, to the row open electrode 110a corresponding to the row in the light modulation array 100 in which the shutter assembly 102 is located. To change the state of a shutter assembly 102 from an open state to a closed state, i.e., to close the shutter assembly 102, the light modulation array 100 applies a potential to the column electrode 108 corresponding to the column of the light modulation array 100 in which the shutter assembly 102 is located and applies a second potential, in some cases having an opposite polarity, to the row close electrode 110b corresponding to the row in the light modulation array 100 in which the shutter assembly 102 is located. In one implementation, a shutter assembly changes state in response to the difference in potential applied to the column electrode and one of the row electrodes 110a or 110b exceeding a predetermined switching threshold.

To form an image, in one implementation, light modulation array 100 sets the state of each shutter assembly 102 one row at a time in sequential order. For a given row, the light modulation array 100 first closes each shutter assembly 102 in the row by applying a potential to the corresponding row close electrode 110b and a pulse of potential to all of the column electrodes 108. Then, the light modulation array 100 opens the shutter assemblies 102 through which light is to pass by applying a potential to the row open electrode 110a and applying a potential to the column electrodes 108 for the columns which include shutter assemblies in the row which are to be opened. In one alternative mode of operation, instead of closing each row of shutter assemblies 102 sequentially, after all rows in the light modulation array 100 are set to the proper position to form an image 104, the light modulation array 100 globally resets all shutter assemblies 102 at the same time by applying a potentials to all row close electrodes 110b and all column electrodes 108 concurrently. In another alternative mode of operation, the light modulation array 100 forgoes resetting the shutter assemblies 102 and only alters the states of shutter assemblies 102 that need to change state to display a subsequent image 104.

In addition to the column electrode 108 and the row electrodes 110a and 110b, each shutter assembly includes a shutter 112 and an aperture 114. To illuminate a pixel 106 in the image 104, the shutter is positioned such that it allows light to pass, without any significant obstruction, through, the aperture 114 towards a viewer. To keep a pixel unlit, the shutter 112 is positioned such that it obstructs the passage of light through the aperture 114. The aperture 114 is defined by an area etched through a reflective material in each shutter assembly, such as the column electrode 108. The aperture 114 may be filled with a dielectric material.

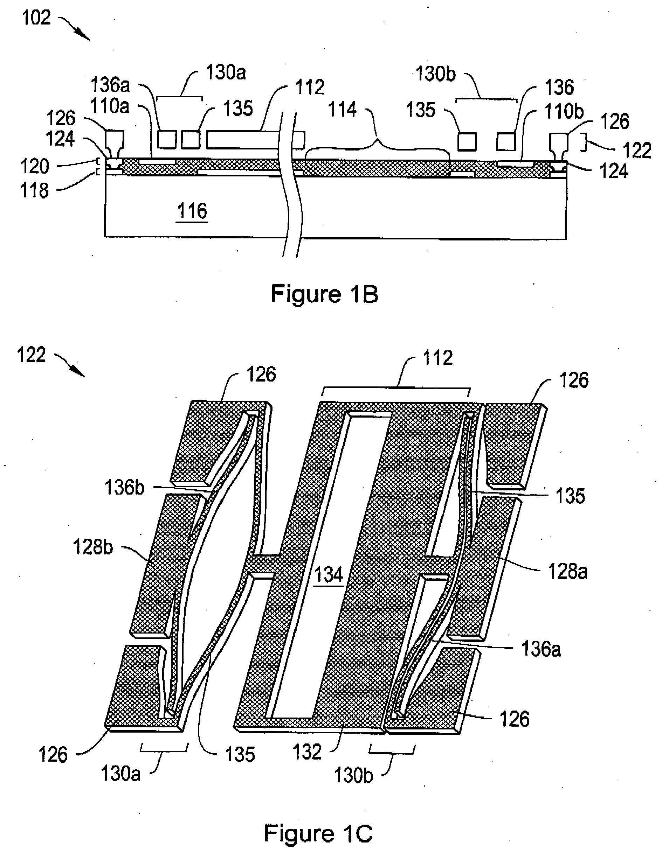

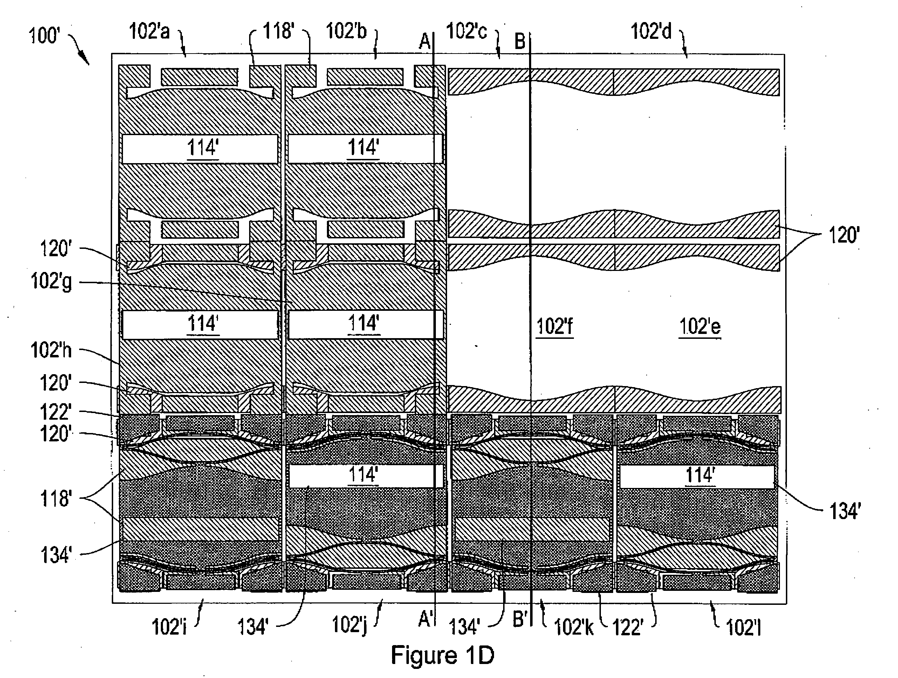

Figure 1B is a cross sectional diagram (see line A-A' below in Figure 1D) of one of the shutter assemblies 102 of Figure 1A, illustrating additional features of the shutter assemblies 102. Referring to Figures 1A and 1B, the shutter assembly 102 is built on a substrate 116 which is shared with other shutter assemblies 102 of the light modulation array 100. The substrate 116 may support as many as 4,000,000 shutter assemblies, arranged in up to about 2000 rows and up to about 2000 columns.

As described above, the shutter assembly 102 includes a column electrode 108, a row open electrode 110a, a row close electrode 110b, a shutter 112, and an aperture 114. The column electrode 108 is formed from a substantially continuous layer of reflective metal, the column metal layer 118, deposited on the substrate 116. The column metal layer 118 serves as the column electrode 108 for a column of shutter assemblies 102 in the light modulation array 100. The continuity of the column metal layer 118 is broken to electrically isolate one column electrode 108 from the column electrodes 108 of shutter assemblies 102 in other columns of the light modulation array 100. As mentioned above, each shutter assembly 102 includes an aperture 114 etched through the column metal layer 118 to form a light-transmissive region.

The shutter assembly includes a row metal layer 120, separated from the column metal layer 118 by one or more intervening layers of dielectric material or metal. The row metal layer 120 forms the two row electrodes 110a and 110b shared by a row of shutter assemblies 102 in light modulation array 100. The row metal layer 120 also serves to reflect light passing through gaps in the column metal layer 118 other than over the apertures 114. The column metal layer and the row metal layer are between about 0.1 and about 2 µm thick. In alternative implementations, such as depicted in Figure 1D (described below), the row metal layer 120 can be located below the column metal layer 118 in the shutter assembly 102.

The shutter 102 assembly includes a third functional layer, referred to as the shutter layer 122, which includes the shutter 112. The shutter layer 122 can be formed from metal or a semiconductor. Metal or semiconductor vias 124 electrically connect the column metal layer 118 and the row electrodes 110a and 110b of the row metal layer 120 to features on the shutter layer 122. The shutter layer 122 is separated from the row metal layer 120 by a lubricant, vacuum or air, providing the shutter 112 freedom of movement.

Figure 1C is a isometric view of a shutter layer 122, according to an illustrative embodiment of the invention. Referring to both Figures 1B and 1C, the shutter layer 122, in addition to the shutter 112, includes four shutter anchors 126, two row anchors 128a and 128b, and two actuators 130a and 130b, each consisting of two opposing compliant beams. The shutter 112 includes an obstructing portion 132 and, optionally, as depicted in Figure 1C, a shutter aperture 134. In the open state, the shutter 112 is either clear of the aperture 114, or the shutter aperture 134 is positioned over the aperture 134, thereby allowing light to pass through the shutter assembly 102. In the closed state, the obstructing portion 132 is positioned over the aperture, obstructing the passage of light through the shutter assembly 102. In alternative implementations, a shutter assembly 102 can include additional apertures 114 and the shutter 112 can include multiple shutter apertures 134. For instance, a shutter 112 can be designed with a series of narrow slotted shutter apertures 134 wherein the total area of the shutter apertures 134 is equivalent to the area of the single shutter aperture 134 depicted in Figure 1C. In such implementations, the movement required of the shutter to move between open and closed states can be significantly reduced.

Each actuator 130a and 130b is formed from two opposing compliant beams. A first pair of compliant beams, shutter actuator beams 135, physically and electrically connects each end of the shutter 112 to the shutter anchors 126, located in each corner of the shutter assembly 102. The shutter anchors 126, in turn, are electrically connected to the column metal layer 118. The second pair of compliant beams, row actuator beams 136a and 136b extends from each row anchor 128a and 128b. The row anchor 128a is electrically connected by a via to the row open electrode 110a. The row anchor 128b is electrically connected by a via to the row close electrode 110b. The shutter actuator beams 135 and the row actuator beams 136a and 136b (collectively the "actuator beams 135 and 136") are formed from a deposited metal, such as Au, Cr or Ni, or a deposited semiconductor, such as polycrystalline silicon, or amorphous silicon, or from single crystal silicon if formed on top of a buried oxide (also known as silicon on insulator). The actuator beams 135 and 136 are patterned to dimensions of about 1 to about 20 µm in width, such that the actuator beams 135 and 136 are compliant.

Figure 1D is a top-view of the various functional layers of a light modulation array 100', according to an illustrative embodiment of the invention. The light modulation array 100' includes twelve shutter assemblies 102'a-102'l, in various stages of completion. Shutter assemblies 102'a and 102'b include just the column metal layer 118' of the light modulation array 100'. Shutter assemblies 102'c-102'f include just the row metal layer 120' (i.e., the row open electrode and the row-close electrode) of the light modulation array 100'. Shutter assemblies 102'g and 102'h include the column metal layer 118' and the row metal layer 120'. In contrast to the shutter assembly 102 in Figure 1B, the column metal layer 118' is deposited on top of the row metal layer 120'. Shutter assemblies 102'i-1 depict all three functional layers of the shutter assemblies 102', the row metal layer 120', the column metal layer 118', and a shutter metal layer 122'. The shutter assemblies 102'i and 102'k are closed, indicated by the column metal layer 118' being visible through the shutter aperture 134'included in the shutter assemblies 102'i and 102'k. The shutter assemblies 102'j and 102'1 are in the open position, indicated by the aperture 114' in the column metal layer 118' being visible in the shutter aperture 134'.

In other alternate implementations, a shutter assembly can include multiple apertures and corresponding shutters and actuators (for example, between , 1 and 10) per pixel. In changing the state of this shutter assembly, the number of actuators activated can depend on the switching voltage that is applied or on the particular combination of row and column electrodes that are chosen for receipt of a switching voltage. Implementations are also possible in which partial openings of an aperture is made possible in an analog fashion by providing a switching voltages partway between a minimum and a maximum switching voltage. These alternative implementations provide an improved means of generating a grey scale.

With respect to actuation of shutter assemblies 102, in response to applying a potential to the column electrode 108 of the shutter assembly 102, the shutter anchors 126, the shutter 112 and the shutter actuator beams 135 become likewise energized with the applied potential. In energizing one of the row electrodes 110a or 110b, the corresponding row anchor 128a or 128b and the corresponding row actuator beam 136a or 136b also becomes energized. If the resulting potential difference between a row actuator beam 136a or 136b and its opposing shutter actuator beam 135 exceeds a predetermined switching threshold, the row actuator beam 136a or 136b attracts its opposing shutter actuator beam 135, thereby changing the state of the shutter assembly 102.

As the actuator beams 135 and 136 are pulled together, they bend or change shape. Each pair of actuator beams 135 and 136 (i.e., a row actuator beam 134a or 134b and its opposing shutter actuator beam 135) can have one of two alternate and stable forms of curvature, either drawn together with parallel shapes or curvature, or held apart in a stable fashion with opposite signs to their of curvature. Thus, each pair is mechanically bi-stable. Each pair of actuator beams 135 and 136 is stable in two positions, one with the shutter 112 in an "open" position, and a second with the shutter 112 in a "closed" position. Once the actuator beams 135 and 136 reach one of the stable positions, no power and no applied voltage need be applied to the column electrode 108 or either row electrode 110a or 110b to keep the shutter 112 in that stable position. Voltage above a predetermined threshold needs to be applied to move the shutter 112 out of the stable position.

While both the open and closed positions of the shutter assembly 102 are energetically stable, one stable position may have a lower energy state than the other stable position. In one implementation, the shutter assemblies 102 are designed such that the closed position has a lower energy state than the open position. A low energy reset pulse can therefore be applied to any or all pixels in order to return the entire array to its lowest stress state, corresponding also to an all-black image.

The light modulation array 100 and its component shutter assemblies 102 are formed using standard micromachining techniques known in the art, including lithography; etching techniques, such as wet chemical, dry, and photoresist removal; thermal oxidation of silicon; electroplating and electroless plating; diffusion processes, such as boron, phosphorus, arsenic, and antimony diffusion; ion implantation; film deposition, such as evaporation (filament, electron beam, flash, and shadowing and step coverage), sputtering, chemical vapor deposition (CVD), epitaxy (vapor phase, liquid phase, and molecular beam), electroplating, screen printing, and lamination. See generally Jaeger, Introduction to Microelectronic Fabrication (Addison-Wesley Publishing Co., Reading Mass. 1988); Runyan, et al., Semiconductor Integrated Circuit Processing Technology (Addison-Wesley Publishing Co., Reading Mass. 1990); Proceedings of the IEEE Micro Electro Mechanical Systems Conference 1987-1998; Rai-Choudhury, ed., Handbook of Microlithography, Micromachining & Microfabrication (SPIE Optical Engineering Press, Bellingham, Wash. 1997).

More specifically, multiple layers of material (typically alternating between metals and dielectrics) are deposited on top of a substrate forming a stack. After one or more layers of material are added to the stack, patterns are applied to a top most layer of the stack marking material either to be removed from, or to remain on, the stack. Various etching techniques, including wet and/or dry etches, are then applied to the patterned stack to remove unwanted material. The etch process may remove material from one or more layers of the stack based on the chemistry of the etch, the layers in the stack, and the amount of time the etch is applied. The manufacturing process may include multiple iterations of layering, patterning, and etching.

The process also includes a release step. To provide freedom for parts to move in the resulting device, sacrificial material is interdisposed in the stack proximate to material that will form moving parts in the completed device. An etch removes much of the sacrificial material, thereby freeing the parts to move.

After release the surfaces of the moving shutter are insulated so that charge does not transfer between moving parts upon contact. This can be accomplished by thermal oxidation and/or by conformal chemical vapor deposition of an insulator such as A1203, Cr203, TiO2, HfO2, V2O5, Nb2O5, Ta2O5, SiO2, or Si3N4 or by depositing similar materials using techniques such as atomic layer deposition. The insulated surfaces are chemically passivated to prevent problems such as stiction between surfaces in contact by chemical conversion processes such as fluoridation or hydrogenation of the insulated surfaces.

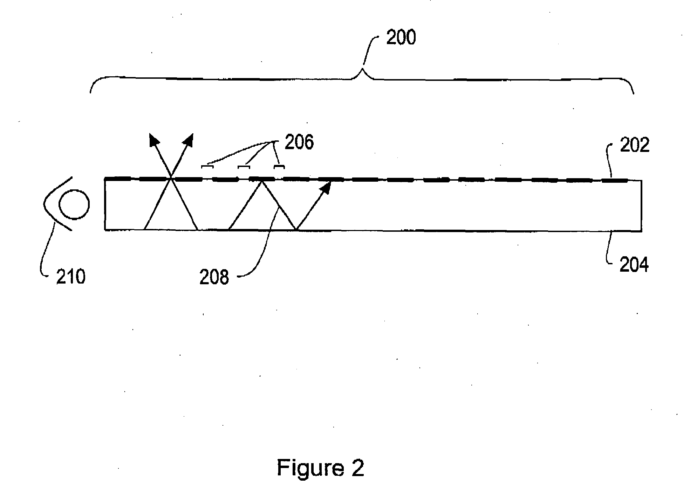

Figure 2 is a cross-section of an optical cavity 200 for use in a spatial light modulator, according to an illustrative embodiment of the invention. The optical cavity 200 includes a front reflective surface 202 and a rear reflective surface 204. The front reflective surface 202 includes an array of light-transmissive regions 206 through which light 208 can escape the optical cavity 200. Light 208 enters the optical cavity 200 from one or more light sources 210. The light 206 reflects between the front and rear reflective surfaces 202 and 204 until it reflects through one of the light-transmissive regions 206. Additional reflective surfaces may be added along the sides of the optical cavity 200.

The front and rear reflective surfaces 202 and 204, in one implementation, are formed by depositing a metal or semiconductor onto either a glass or plastic substrate. In other implementations, the reflective surfaces 202 and 204 are formed by depositing metal or semiconductor on top of a dielectric film that is deposited as one of a series of thin films built-up on a substrate. The reflective surfaces 202 and 204 have reflectivities above about 50%. For example, the reflective surfaces 202 and 204 may have reflectivities of 70%, 85%, 96%, or higher.

Smoother substrates and finer grained metals yield higher reflectivities. Smooth surfaces may be obtained by polishing a glass substrate or by molding plastic into smooth-walled forms. Alternatively, glass or plastic can be cast such that a smooth surface is formed by the settling of a liquid / air interface. Fine grained metal films without inclusions can be formed by a number of vapor deposition techniques including sputtering, evaporation, ion plating, laser ablation, or chemical vapor deposition. Metals that are effective for this reflective application include, without limitation, Al, Cr, Au, Ag, Cu, Ni, Ta, Ti, Nd, Nb, Si, Mo and/or alloys thereof.

Alternatively, the reflective surface can be formed by interposing a dielectric material of low refractive index between a light guide in the optical cavity 200 and any of a series of thin films deposited on top of it. The change in refractive index between the light guide and the thin film leads to a condition of total internal reflection within the light guide, whereby incident light of sufficiently low incidence angle can be reflected with nearly 100% efficiency.

In the alternative, the reflective surfaces 202 or 204 can be formed from a mirror, such as a dielectric mirror. A dielectric mirror is fabricated as a stack of dielectric thin films which alternate between materials of high and low refractive index. A portion of the incident light is reflected from each interface where the refractive index changes. By controlling the thickness of the dielectric layers to some fixed fraction or multiple of the wavelength and by adding reflections from multiple parallel interfaces, it is possible to produce a net reflective surface having a reflectivity exceeding 98%. Some dielectric mirrors have reflectivities greater than 99.8%. Dielectric mirrors can be custom-designed to accept a pre-specified range of wavelengths in the visible range and to accept a pre-specified range of incident angles. Reflectivities in excess of 99% under these conditions are possible as long as the fabricator is able to control the smoothness in the dielectric film stacks. The stacks can include between about 20 and about 500 films.

In another alternative, the first and second reflective surfaces 202 or 204 are included in the optical cavity 200 as separate components. A thin sheet of polished stainless steel or aluminum can suffice for this purpose. Also, it is possible to produce a reflective metal surface or a dielectric mirror on the surface of a continuous sheet or roll of plastic. The sheet of reflective plastic can then be attached or adhered to other components in the optical cavity 200.

The light-transmissive regions 206 are arranged in an array to form pixels from which an image is formed. In the illustrative embodiment, the light-transmissive regions 206 are spaced between about 100 and about 350 µm apart. The light transmissive regions are oblong or rectangular in shape, wherein the greater dimension is between about 50 and about 300 µm while the narrower dimension is between 2 and 100 µm, though other shapes and sizes may be suitable. For projection displays the pitch can be as small as 20 µm, with aperture widths as small as 5 µm. The ratio between the area of the front reflective surface 202 taken up by light-transmissive regions 206 and the total area of the front reflective surface 202 is referred to herein as the transmissiveness ratio. Illustrative implementations of the optical cavity 200 have transmissiveness ratios of between about 5% and about 50%. Normally, spatial light modulators having such low transmissiveness ratios would emit insufficient light to form a usable image. To ensure greater light 208 emission from the optical cavity 200, the front and rear reflective surfaces 202 and 204 reflect the light 208 back and forth a number of times until the reflected light 208 passes through a light-transmissive region 206, or until the light 208 loses its energy from the reflections. Higher reflectivity surfaces result in more light 208 escaping from the optical cavity 200 to form an image. Table 1, below, lists the percentage of light 208 introduced into the optical cavity 200 that escapes through the light-transmissive regions 206 (in terms of efficiency) for several transmissiveness ratio/reflectivity pairings.

**TABLE 1**

| Transmissiveness Ratio | Reflectivity | Efficiency |
|---|---|---|
| 8% | 0.97 | 59% |
| | 0.93 | 40% |
| | 0.88 | 30% |
| 14% | 0.97 | 71% |
| | 0.93 | 55% |
| | 0.88 | 43% |
| 20% | 0.97 | 79% |
| | 0.93 | 65% |
| | 0.88 | 53% |

When the optical cavity 200 is used to form the basis of a transmissive display, one or more light sources 210 introduce light into the optical cavity 200. The light source(s) 210 may be of any suitable type, including, for example, any of the types disclosed in U.S. Pat. Nos. 4,897,771 and 5,005,108. In particular, the light source(s) 210 may be an arc lamp, an incandescent bulb which also may be colored, filtered or painted, a lens end bulb, a line light, a halogen lamp, a light emitting diode (LED), a chip from an LED, a neon bulb, a fluorescent tube, a fiber optic light pipe transmitting from a remote source, a laser or laser diode, or any other suitable light source. Additionally, the light sources may be a multiple colored LED, or a combination of multiple colored radiation sources 210 in order to provide a desired colored or white light output distribution. For example, a plurality of colored lights such as LEDs of different colors (red, blue, green) or a single LED with multiple colored chips may be employed to create white light or any other colored light output distribution by varying the intensities of each individual colored light. A reflector may be positioned proximate to the light source 210 to reflect light 208 emitted away from the optical cavity 200 towards the optical cavity 200. In one implementation, three light sources 210, one red light source 210, one green light source 210, and one blue light source 210, sequentially introduce light 208 into the optical cavity 200, alternating at frequencies in the range of 20 to 600 Hz. A rate in excess of 100 Hz is generally faster than what the human eye can detect, thus providing a color image.

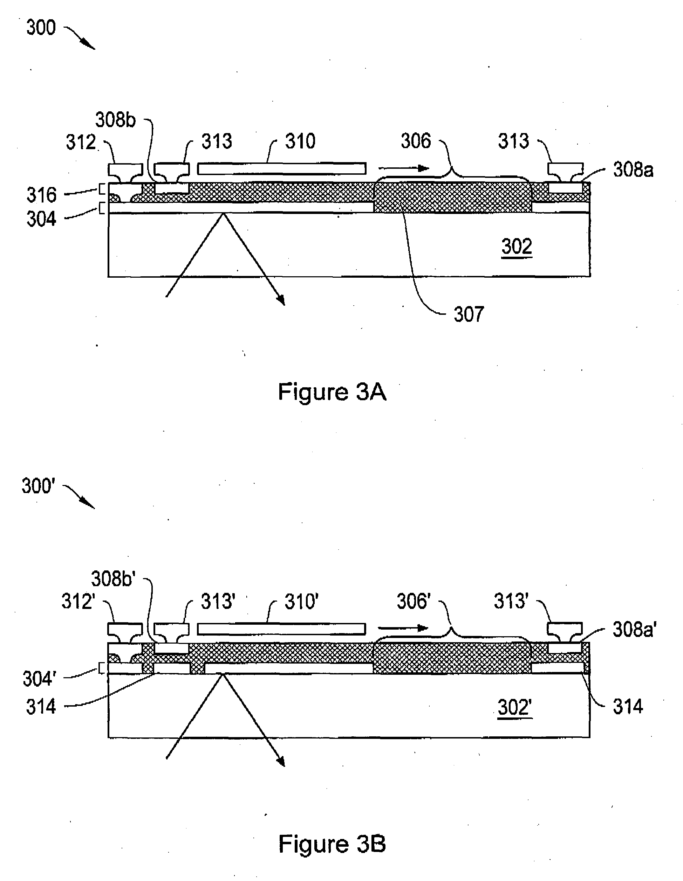

Figure 3A is a linear cross-sectional view of a shutter assembly 300 in an open position. The shutter assembly 300 is formed on transparent substrate 302 having a thickness of from about .3 mm to about 2 mm. The substrate 302 can be, for example, made of a glass or a plastic. Suitable glasses include borosilicate glasses, or other glasses that can withstand processing temperatures up to or exceeding 400 degrees Centigrade. Suitable plastics for the substrate 302 include, for example, polyethyleneterephthalate (PET), or polytetrafluoroethylene (PETF), or other substantially transparent plastics that can withstand processing temperatures in excess of 200°C. Other candidate substrate materials include quartz and sapphire, which are understood to withstand processing temperatures in excess of 800°C.

The lowest layer, referred to as the "column metal layer" 304, of the shutter assembly 300 serves as the front reflective surface 202 of the optical cavity of Figure 2. During the process of manufacturing the shutter assembly 300, an aperture 306 is etched through the column metal layer 304 to form a light-transmissive region, such as the light transmissive regions 206 of Figure 2. The aperture 306 can be generally circular, elliptical, polygonal, serpentine, or irregular in shape. The aperture occupies about 5% to about 25%of the area dedicated to the particular shutter assembly 300 in the light modulation array. Other than at the aperture 306, the column metal layer 304 is substantially unbroken. The aperture 306 is filled with a dielectric material 307. Example dielectrics suitable for inclusion in the shutter assembly 300 include SiO₂ Si₃N₄, and Al₂O₃.

The next layer is composed mostly of a dielectric material 307, separating the column metal layer 304 from the row electrodes 308a and 308b disposed a layer above. The dielectric layers 316 may be between 0.3 and 10 µm thick. The top layer of the shutter assembly 300 includes a shutter anchor 312, two row anchors 313, two actuators, and a shutter 310. The beams of the actuators are not shown as the cross section of the shutter assembly 300 is taken at a position in which the row actuator beams meet the row anchors 313 and the shutter actuator beams meet the shutter 310 (see, for example, line B-B' on Figure 1D). The top layer is supported above the lower layers by the anchors 312 so that the shutter 310 is free to move.

In alternative implementations, the row electrodes 308a and 308b are located at a lower layer in the shutter assembly 300 than the column metal layer 304. In another implementation the shutter 310 and actuators can be located at a layer below either of the column metal layer 304 or the row electrodes 308a and 308b.

As described in relation to Figure 1B, the actuators included in the shutter assembly may be designed to be mechanically bi-stable. Alternatively, the actuators can be designed to have only one stable position. That is, absent the application of some form of actuation force, such actuators return to a predetermined position, either open or closed. In such implementations, the shutter assembly 300 includes a single row electrode 308, which, when energized, causes the actuator to push or pull the shutter 310 out of its stable position.

Figure 3B is a cross-sectional view of a second alternative shutter assembly 300' in an open position according to an illustrative embodiment of the invention. The second shutter assembly 300' includes a substrate 302', a column metal layer 304', an aperture 306', row electrodes 308a' and 308b', a shutter 310', two actuators, a shutter anchor 312', and two row anchors 313'. The beams of the actuators are not shown as the cross section of the shutter assembly 300' is taken at a position in which the row actuator beams meet the row anchors 313' and the shutter actuator beams meet the shutter 310'. (See, for example, line B-B' on Figure 1D).

In the shutter assembly 300', additional gaps are etched into the column metal layer 304'. The gaps electrically separate different portions of the column metal layer 304' such that different voltages can be applied to each portion. For instance, in order to reduce parasitic capacitances that can arise between the column metal layer 304' and the row electrodes 308a' and 308b' resulting from their overlap, a voltage can be selectively applied to the sections 314 of the column metal layer 304' that immediately underlies the row electrodes 308a' and 308b' and the anchor 312'.

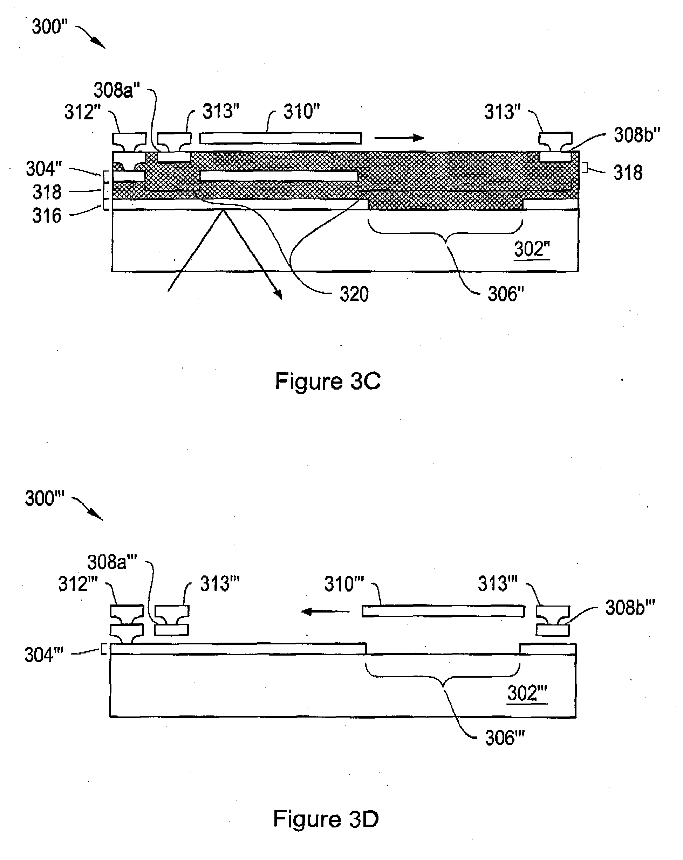

Figure 3C is a cross-sectional view of another third alternative shutter assembly 300" according to an illustrative embodiment of the invention. The shutter assembly 300" includes a substrate 302", a column metal layer 304", an aperture 306", row electrodes 308a" and 308b", a shutter 310", two actuators, a shutter anchor 312", and two row anchors 313". The beams of the actuators are not shown as the cross section of the shutter assembly 300" is taken at a position in which the row actuator beams meet the row anchors 313" and the shutter actuator beams meet the shutter 310". (See, for example, line B-B' on Figure 1D). The shutter assembly 300" includes a reflective film 316 deposited on the substrate 302". The reflective film 316 serves as a front reflective surface for an optical cavity incorporating the shutter assembly 300". With the exception of an aperture 306" formed in the reflective film 316 to provide a light transmissive region, the reflective film 316 is substantially unbroken. A dielectric layer 318 separates the reflective film 316 from the column metal layer 304". At least one additional dielectric layer 318 separates the column metal layer 304" from the two row electrodes 308a" and 308b". During the process of the manufacturing of the third alternative shutter assembly 300", the column metal layer 304" is etched to remove metal located below the row electrodes 308a" and 308b" to reduce potential capacitances that can form between the row electrodes 308a" and 308b" and the column metal layer 304". Gaps 320 formed in the column metal layer 304" are filled in with a dielectric.

Figure 3D is a cross-sectional view of a further alternative shutter assembly 300"' in a closed position according to an illustrative embodiment of the invention. The fourth alternative shutter assembly 300'" includes a substrate 302"', a column metal layer 304"', an aperture 306"', row electrodes 308a"' and 308b"', a shutter 310"', two actuators, a shutter anchors 312"', and two row anchors 313"'. The beams of the actuators are not shown as the cross section of the shutter assembly 300'" is taken at a position in which the row actuator beams meet the row anchors 313"' and the shutter actuator beams meet the shutter 310"'. (See, for example, line B-B' on Figure 1D). In contrast to the previously depicted shutter assemblies 102, 300, 300', and 300", much of the dielectric material used in building the fourth alternative shutter assembly 300'' is removed by one or more etching steps.

The space previously occupied by the dielectric material can be filled with a lubricant to reduce friction and prevent stiction between the moving parts of the shutter assembly 300"'. The lubricant fluid is engineered with viscosities preferably below about 10 centipoise and with relative dielectric constant preferably above about 2.0, and dielectric breakdown strengths above about 10⁴ V/cm. Such mechanical and electrical properties are effective at reducing the voltage necessary for moving the shutter between open and closed positions.. In one implementation, the lubricant preferably has a low refractive index, preferably less than about 1.5. In another implementation the lubricant has a refractive index that matches that of the substrate 302. Suitable lubricants include, without limitation, de-ionized water, methanol, ethanol, silicone oils, fluorinated silicone oils, dimethylsiloxane, polydimethylsiloxane, hexamethyldisiloxane, and diethylbenzene.

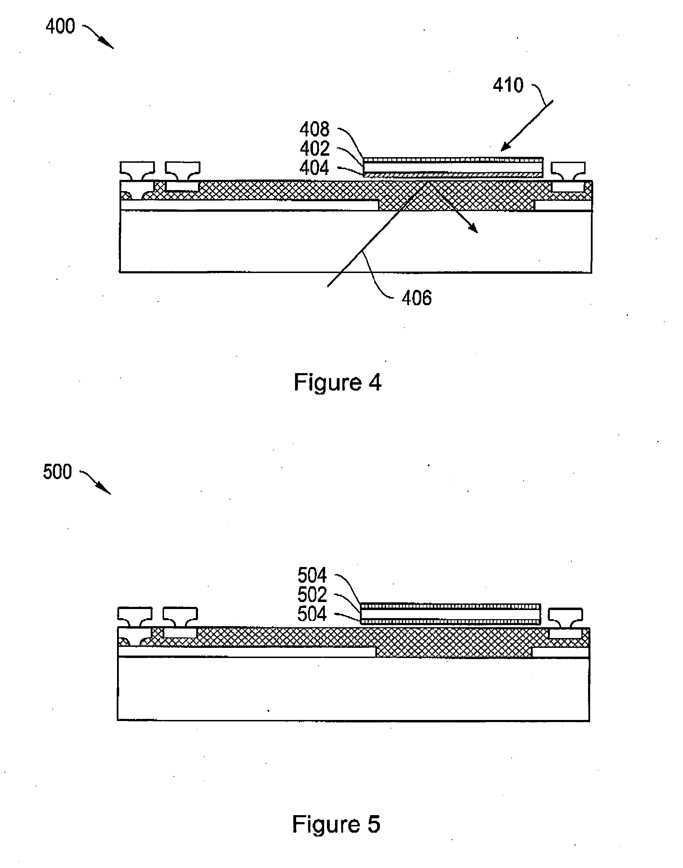

Figure 4 is a cross sectional view of a shutter assembly 400 with a coated shutter 402, according to an illustrative embodiment of the invention. The shutter assembly 400 is depicted as having the general structure of the shutter assembly 300 of Figure 3A. However, the shutter assembly 400 can take the form of any of the shutter assemblies 102, 300, 300', 300", or 300'" described above or any other shutter assembly described below.

A reflective film 404 coats the bottom of the shutter 402 to reflect light 406 back through the shutter assembly 400 when the shutter 402 is in the closed position. Suitable reflective films 404 include, without limitation, smooth depositions of Al, Cr, or Ni. The deposition of such a film 404, if the film 404 is greater than about 0.2 µm thick, provides a reflectivity for the shutter of 95% or higher. Alternatively, amorphous or polycrystalline Si, when deposited onto a smooth dielectric surface, can provide reflectivity high enough to be useful in this application

The top of the shutter 402 is coated with a light absorbing film 408 to reduce reflection of ambient light 410 striking the top of the shutter assembly 400. The light absorbing film 408 can be formed from the deposition and/or anodization of a number of metals, such as Cr, Ni, or Au or Si in a manner that creates a rough or porous surface. Alternatively, the light absorbing film 408 can include an acrylic or vinyl resin which includes light absorbing pigments. In alternative implementations of the shutter assembly 400, the absorbing film 408 is applied to the entire, or substantially the entire top surface of the shutter assembly 400.

Figure 5 is a cross sectional view of a shutter assembly 500 with a second coated shutter 502, according to an illustrative embodiment of the invention. The shutter assembly 500 is depicted as having the general structure of the first alternative shutter assembly 300 of Figure 3A. However, the shutter assembly can take the form of any of the shutter assemblies describes above 102, 300, 300', 300", and 300"' or any other shutter assembly described below. In the shutter assembly 500, both the top and the bottom of the shutter 502 are coated with a light absorbing film 504 such as a light absorbing film 408. The light absorbing film 504 on the bottom of the shutter 502 absorbs light impacting the shutter 502 in a closed position. For an optical cavity, such as optical cavity 200 of Figure 2, including the shutter assembly 500, the intensity of light exiting the optical cavity is independent of the image being formed. That is, light intensity is independent of the fraction of shutters that may be in the open or the closed position.

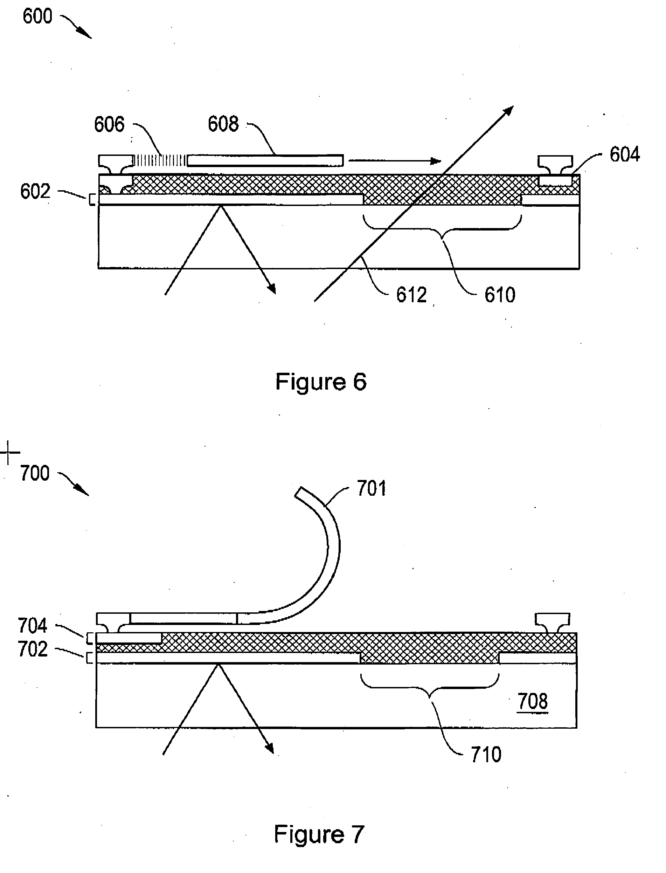

Figure 6 is cross-sectional view of an elastically actuated shutter assembly 600 for use in a light modulation array, such as light modulation array 102, according to an illustrative embodiment of the invention. The elastically actuated shutter assembly 600 includes a metal column layer 602, a single row electrode 604, an elastic element 606, and a shutter 608. The elastic element 606 provides a restoring force which keeps the shutter 608 in an open position, away from a corresponding aperture 610 in the column metal layer 602. In the open position, light 612 can pass through the aperture 610. Provision of a switching voltage to the single row electrode 604 counters the force of the elastic element 606, thereby putting the shutter 608 into a closed position over the aperture 610. In the closed position, the shutter 608 blocks light 612 from exiting through the aperture 610. In an alternative implementation, the shutter assembly 600 may include a latch to lock the shutter 608 into a closed position such that after the shutter 608 closes, the row electrode 604 can be de-energized without the shutter 608 opening. To open the shutter 608, the latch is released. In still another implementation of the shutter assembly 600, the elastic actuator tends to keep the shutter 608 in a closed position. Applying a voltage to the row electrode 604 moves the shutter 608 into an open position.

Figure 7 is a cross-sectional view of a shutter assembly 700 with a deformable shutter 701 for use in a light modulation array, according to an illustrative embodiment of the invention. The shutter assembly 700 includes a column metal layer 702, and one row electrode 704 formed on a substrate 708. The deforming shutter 701, instead of translating from one side of the shutter assembly 700 to the other side of the shutter assembly 700 to open and close, deforms in response to the energizing of the row electrode 704. The deforming shutter 701 is formed such that the deforming shutter 701 retains residual stress, resulting in the deforming shutter 701 tending to curl up out of the plane of the light modulation array in which it is included. By imposing a switching voltage between the row electrode 704 and the column metal layer 702, the deforming shutter 701 is attracted towards the substrate 708, thereby covering an aperture 710 formed in the column metal layer 702. Deformable or hinge type actuators have been described in the art, for instance in U.S. Patent Nos. 4,564,836 and 6,731,492.

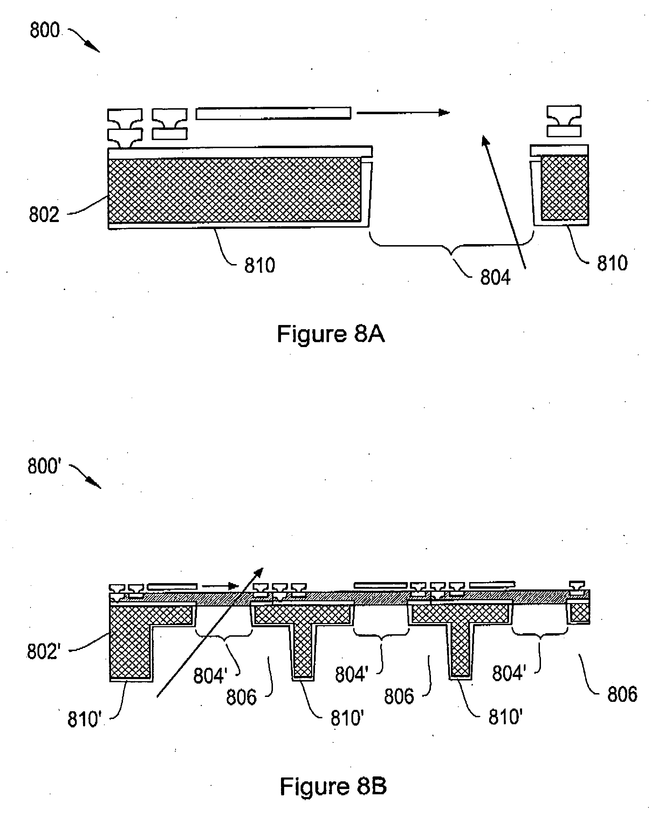

Figure 8A is a cross-sectional view of a shutter assembly 800 with an opaque substrate 802, such as silicon, for use in a light modulation array, according to an illustrative embodiment of the invention. The opaque substrate 802 has a thickness in the range of about 200 µm to about 1 mm. Though the shutter assembly 800 resembles the shutter assembly 300 of Figure 3A, the shutter assembly 800 can take substantially the same form of any of the shutter assemblies 300, 300', 300", 300"', 400, 500, 600, or 700 described in Figures 3-7. An aperture 804 is etched through the entirety of the opaque substrate 802. In one implementation, the aperture 804 is formed using an anisotropic dry etch such as in a CFCl₃ gas with plasma or ion assist. The shutter assembly 800 may also include a reflective coating 810 deposited on the side of the opaque substrate 802 opposite the column metal layer.

Figure 8B is a cross-sectional view of a second shutter assembly 800' with an opaque substrate 802' for use in a light modulation array, according to an illustrative embodiment of the invention. In comparison to the shutter assembly 800 in Figure 8A, the underside of the opaque substrate 800' is etched away forming cavities 806 beneath the apertures 804' of the shutter assembly 800'. The cavities 806 allow light from a larger range of angles to escape through the aperture 804'. The larger range provides for a brighter image and a larger viewing angle.

The shutter assemblies described in Figures 1 and 3-8 depend on electrostatic forces for actuation. A number of alternative actuator forcing mechanisms can be designed into shutter assemblies, including without limitation the use of electromagnetic actuators, thermoelastic actuators, piezoelectric actuators, and electrostiction actuators. Other shutter motions which can be used to controllably obstruct an aperture include without limitation sliding, rotating, bending, pivoting, hinging, or flapping; all motions which are either within the plane of the reflective surface or transverse to that plane.

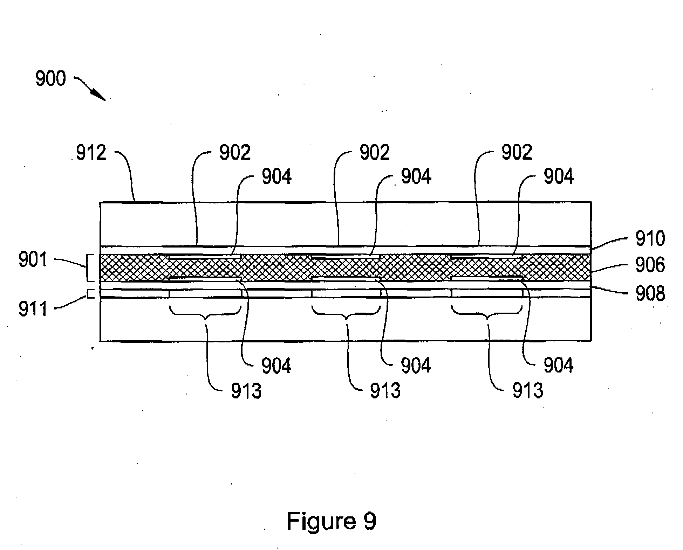

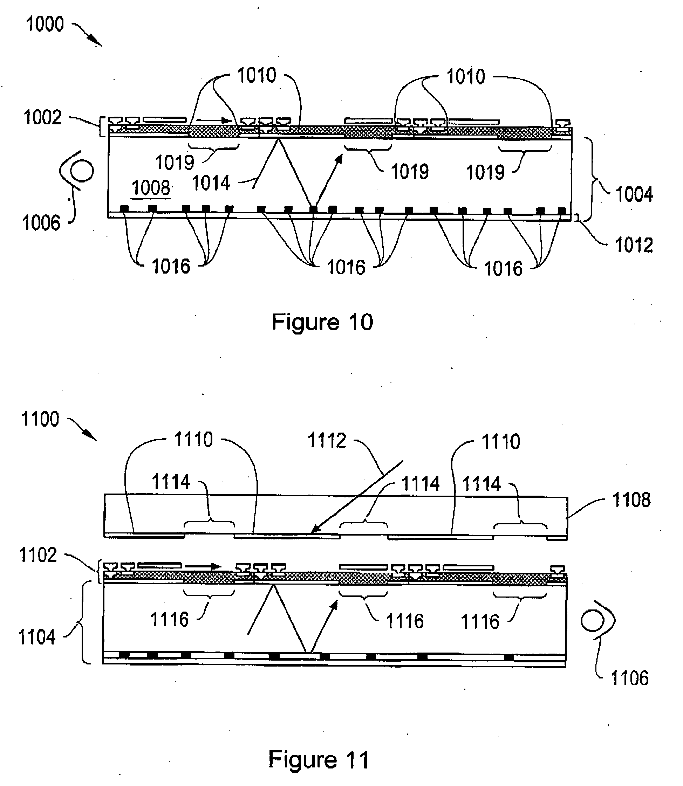

Figure 9 is a cross-sectional view of a liquid crystal-based spatial light modulator 900. The liquid crystal-based spatial light modulator 900 includes an array 901 of liquid crystal cells 902. The liquid crystal cells 902 include pairs of opposing transparent electrodes 904 on either side of a layer of liquid crystal molecules 906. On one side of the liquid crystal array 901, the liquid crystal-based spatial light modulator 900 includes a polarizer 908. On the opposite side of the array 901, the liquid crystal-based spatial light modulator 900 includes an analyzer 910. Thus, without intervention, light passing through the polarizer 908 would be filtered blocked by the analyzer 910. When a voltage is imposed between the transparent electrodes 904, the liquid crystal molecules 906 between the electrodes 904 align themselves with the resultant electric field reorienting the light passing through the polarizer 908 such that it can pass through the analyzer 910. The polarizer 908 is positioned on top of a front reflective surface 911, which defines a plurality of light-transmission regions 913. The array 901 is attached to an optical cavity, such as optical cavity 200 and includes a cover plate 912. Cover plates are described in further detail in relation to Figure 11.

Each liquid crystal cell 902 may have a corresponding red, green, or blue color specific filter. Alternatively, color differentiation can be provided by multiple lamps operating in sequence as described above in relation to Figure 2.

Most liquid crystal displays (LCDs) are designed with resolutions of 80 to 110 dots per inch (318 to 231 µm pitch), wherein pixel widths are in the range of 250 to 330 µm. For such an LCD display, even with active matrix or thin-film transistor (TFT) addressing or switching, the transmissiveness ratio of the liquid-crystal display is in the range of 75 to 90%. For high-resolution applications (e.g. for document displays or projection displays) in which the desired image resolution is 300 to 500 dots per inch (85 to 51 µm pitch), however, and where pixels are only 50 µm in diameter, the overhead required for TFT addressing can limit the available transmissiveness ratio to about 30 or 50%. Such high-resolution displays, therefore, typically suffer from a lower luminous efficiency than their lower-resolution counterparts due to a loss of aperture ratio. By constructing the liquid crystal display using an optical cavity as described above, greater luminous efficiency can be achieved even in high-definition LCD displays.

Figure 10 is a cross sectional view of a first shutter-based spatial light modulator 1000 according to an illustrative embodiment of the invention. The shutter-based spatial light modulator 1000 includes a light modulation array 1002, an optical cavity 1004, and a light source 1006. The light modulation array 1002 can include any of the shutter assemblies 300, 300', 300", 300"', 400, 500, 600, 700, 800, or 800' described above in Figures 3-8. The optical cavity 1004, in the first shutter-based spatial light modulator 1000, is formed from a light guide 1008 having front and rear surfaces. A front reflective surface 1010 is deposited directly on the front surface of the light guide 1008 and a second reflective surface 1012 is deposited directly on the rear surface of the light guide 1008.

The light guide 1008 can be formed from glass or a transparent plastic such as polycarbonate or polyethylene. The light guide 1008 is about 300 µm to about 2 mm thick. The light guide 1008 distributes light 1014 introduced into the optical cavity 1004 substantially uniformly across the surface of the front reflective surface 1010. The light guide 1008 achieves such distribution by means of a set of total internal reflections as well as by the judicial placement of light scattering elements 1016. The light scattering elements 1016 can be formed in or on the rear side of the light guide 1018 to aid in redirecting light 1014 out of the light guide 1008 and through light-transmissive regions 1019 formed in the front reflective surface 1010.

Figure 11 is a cross sectional view of a second shutter-based spatial light modulator 1100, according to the illustrative embodiment of the invention. As with the first shutter-based spatial light modulator 1000 in Figure 10, the second shutter-based spatial light modulator 1100 includes a light modulation array 1102, an optical cavity 1104, and a light source 1106. In addition, the second spatial light modulator includes a cover plate 1108.

The cover plate 1108 serves several functions, including protecting the light modulation array 1102 from mechanical and environmental damage. The cover plate 1108 is a thin transparent plastic, such as polycarbonate, or a glass sheet. The cover plate can be coated and patterned with a light absorbing material, also referred to as a black matrix 1110. The black matrix can be deposited onto the cover plate as a thick film acrylic or vinyl resin that contains light absorbing pigments.

The black matrix 1110 absorbs substantially all incident ambient light 1112 --ambient light is light that originates from outside the spatial light modulator 1100, from the vicinity of the viewer -- except in patterned light-transmissive regions 1114 positioned substantially proximate to light-transmissive regions 1116 formed in the optical cavity 1104. The black matrix 1110 thereby increases the contrast of an image formed by the spatial light modulator 1100. The black matrix 1110 can also function to absorb light escaping the optical cavity 1104 that may be emitted, in a leaky or time-continuous fashion.

In one implementation, color filters, for example, in the form of acrylic or vinyl resins are deposited on the cover plate 1108. The filters may be deposited in a fashion similar to that used to form the black matrix 1110, but instead, the filters are patterned over the open apertures light transmissive regions 1116 of the optical cavity 1104. The resins can be doped alternately with red, green, or blue pigments.

The spacing between the light modulation array 1102 and the cover plate 1108 is less than 100 µm, and may be as little as 10 µm or less. The light modulation array 1102 and the cover plate 1108 preferably do not touch, except, in some cases, at predetermined points, as this may interfere with the operation of the light modulation array 1102. The spacing can be maintained by means of lithographically defined spacers or posts, 2 to 20 µm tall, which are placed in between the individual right modulators in the light modulators array 1102, or the spacing can be maintained by a sheet metal spacer inserted around the edges of the combined device.

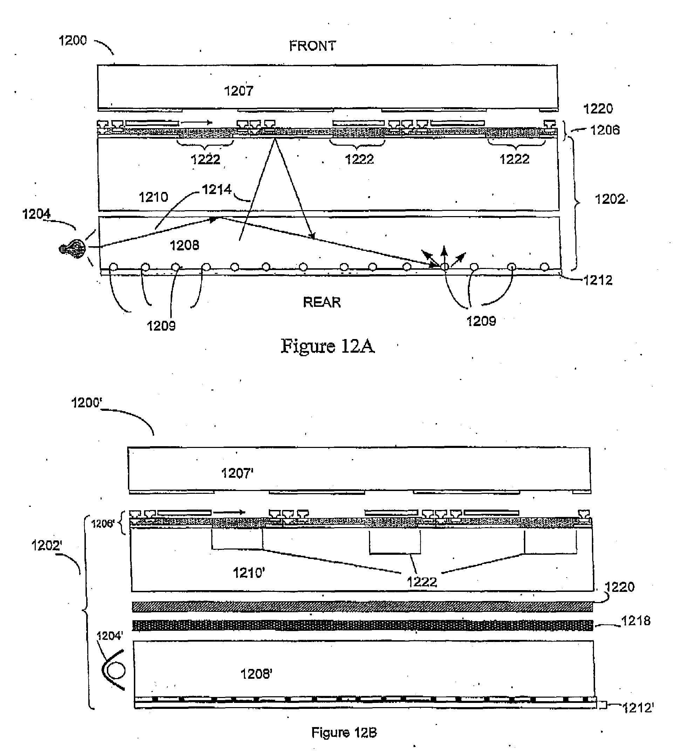

Figure 12A is a cross sectional view of a third shutter-based spatial light modulator 1200, according to an illustrative embodiment of the invention. The third shutter-based spatial light modulator 1200 includes an optical cavity 1202, a light source 1204, and a light modulation array 1206. In addition, the third shutter-based spatial light modulator 1204 includes a cover plate 1207, such as the cover plate 1108 described in relation to Figure 11.

The optical cavity 1202, in the third shutter-based spatial light modulator 1200, includes a light guide 1208 and the rear-facing portion of the light modulation array 1206. The light modulation array 1206 is formed on its own substrate 1210. Both the light guide 1208 and the substrate 1210 each have front and rear sides. The light modulation array 1206 is formed on the front side of the substrate 1210. A front-facing, rear-reflective surface 1212, in the form of a second metal layer, is deposited on the rear side of the light guide 1208 to form the second reflective surface of the optical cavity 1202. Alternatively, the optical cavity 1202 includes a third surface located behind and substantially facing the rear side of the light guide 1208. In such implementations, the front-facing, rear-reflective surface 1212 is deposited on the third surface facing the front of the spatial light modulator 1200, instead of directly on the rear side of the light guide 1208. The light guide 1208 includes a plurality of light scattering elements 1209, such as the light scattering elements 1016 described in relation to Figure 10. As in Figure 10, the light scattering elements are distributed in a predetermined pattern on the rear-facing side of the light guide 1208 to create a more uniform distribution of light throughout the optical cavity.

In one implementation, the light guide 1208 and the substrate 1210 are held in intimate contact with one another. They are preferably formed of materials having similar refractive indices so that reflections are avoided at their interface. In another implementation small standoffs or spacer materials keep the light guide 1208 and the substrate 1210 a predetermined distance apart, thereby optically decoupling the light guide 1208 and substrate 1210 from each other. The spacing apart of the light guide 1208 and the substrate 1210 results in an air gap 1213 forming between the light guide 1208 and the substrate 1210. The air gap promotes total internal reflections within the light guide 1208 at its front-facing surface, thereby facilitating the distribution of light 1214 within the light guide before one of the light scattering elements 1209 causes the light 1214 to be directed toward the light modulator array 1206 shutter assembly. Alternatively, the gap between the light guide 1208 and the substrate 1210 can be filled by a vacuum, one or more selected gasses, or a liquid.

Figure 12B is a cross sectional view of a fourth shutter-based spatial light modulator 1200', according to an illustrative embodiment of the invention. As with the spatial light modulator 1200 of Figure 12A, the fourth spatial light modulator 1200' includes an optical cavity 1202', a light source 1204', a light modulation array 1206', and a cover plate 1207', such as the cover plate 1108 described in relation to Figure 11. The optical cavity 1202' includes a rear-facing reflective surface in the light modulation array 1206', a light guide 1208', and a front-facing rear-reflective surface 1212'. As with the third spatial light modulator 1200, the light modulation array 1206' of the fourth spatial light modulator 1200' is formed on a substrate 1210', which is separate from the light guide 1208'.

In the fourth spatial light modulator 1200', the light guide 1208' and the substrate 1210' are separated by a light diffuser 1218 and a brightness enhancing film 1220. The diffuser 1218 helps to randomize the optical angles of scattered light 1214' to improve uniformity and reduce the formation of ghost images from the light source 1204 or the light modulation array 1206. In one implementation, the brightness enhancement film 1220 includes an array of optical prisms that are molded into a thin plastic sheet, and which act to funnel light into a narrow cone of illumination. The brightness enhancing film 1220 re-directs light leaving the light guide 1208' through light-transmissive regions 1222 at an oblique angle towards the viewer, thus resulting in an apparent increases in brightness along the optical axis for the same input power.

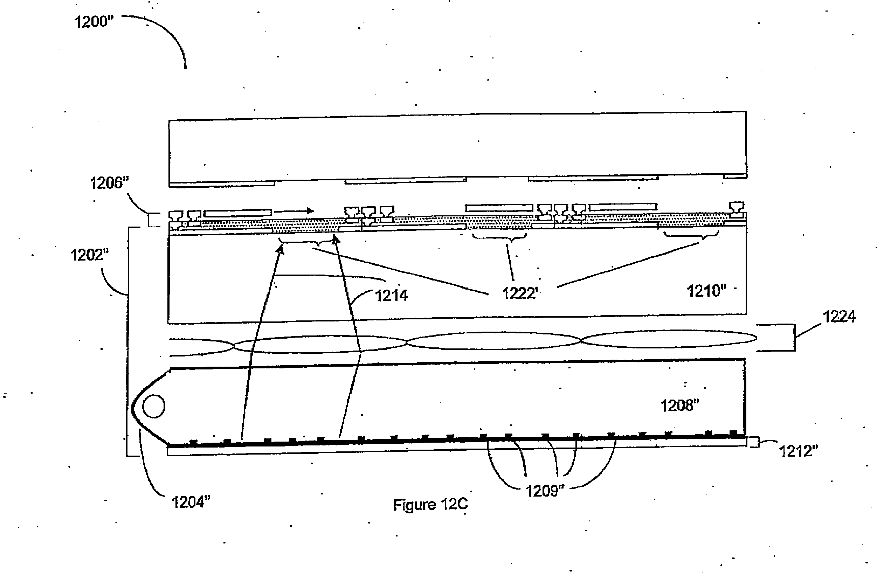

Figure 12C is a cross sectional view of a fifth shutter-based spatial light modulator 1200", according to an illustrative embodiment of the invention. As with the spatial light modulator 1200 of Figure 12A, the fifth spatial light modulator 1200" includes an optical cavity 1202", a light source 1204", a light modulation array 1206", and a cover plate 1207", such as the cover plate 1108 described in relation to Figure 11. The optical cavity 1202" includes a rear-facing reflective surface in the light modulation array 1206", a light guide 1208", and a front-facing rear-reflective surface 1212". As with the third spatial light modulator 1200, the light modulation array 1206" of the fifth spatial light modulator 1200" is formed on a substrate 1210", which is separate from the light guide 1208".

In the fifth spatial light modulator 1200", the light guide 1208" and the substrate 1210" are separated by a microlens array 1224. The microlens array 1224 re-directs light 1214" leaving the light guide 1208" through light-transmissive regions 1222' at an oblique angle towards the viewer, thus resulting in an apparent increases in brightness for the same input power.

In addition, since the light modulation array 1206" in the fifth shutter-based spatial light modulator 1200" is formed on its own substrate 1210", separate from the light guide 1208", the light guide 1208" can be constructed of a moldable plastic, without the transition temperature of the plastic limiting the manufacturing processes available for constructing the light modulation array 1210". Thus, the light guide 1208" can be molded to substantially encapsulate the light source 1204" used to introduce light 1214" into the optical cavity 1202". The encapsulation of the light source 1204" into the light guide 1208" provides improved coupling of light 1214" into the light guide 1208". Similarly, scattering elements 1209" can be incorporated directly in the mold for the light guide 1208".

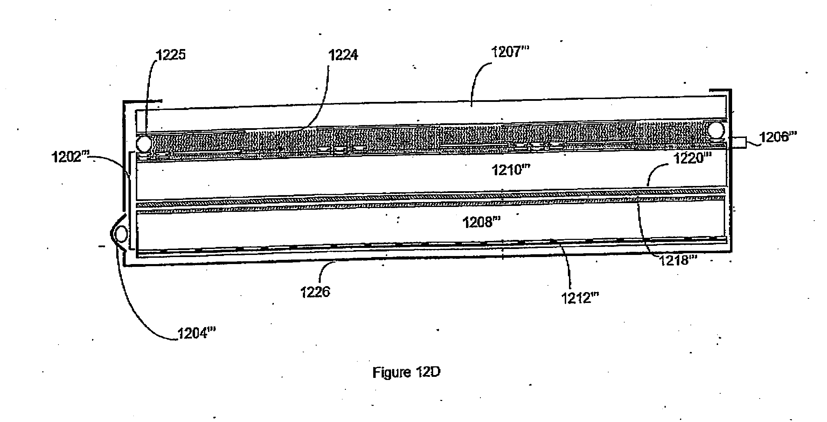

Figure 12D is a cross-sectional view of a sixth illustrative embodiment of a shutter-based light modulation array 1200"'. As with the spatial light modulator 1200 of Figure 12A, the sixth spatial light modulator 1200"' includes an optical cavity 1202"', a light source 1204"', a light modulation array 1206"', and a cover plate 1207"', such as the cover plate 1108 described in relation to Figure 11. The optical cavity 1202'" includes a rear-facing reflective surface in the light modulation array 1206"', a light guide 1208"', a front-facing rear-reflective surface 1212"', a diffuser 1218"', and a brightness enhancing film 1220"'.

The space between the light modulation array 1206'" and the cover plate 1207"' is filled with a lubricant 1224, such as the lubricant described in relation to Figure 3D.. The cover plate 1207'" is attached to the shutter assembly 1206 with an epoxy 1225. The epoxy should have a curing temperature preferably below about 200 C, it should have a coefficient of thermal expansion preferably below about 50 ppm per degree C and should be moisture resistant. An exemplary epoxy is EPO-TEK B9021-1, sold by Epoxy Technology, Inc. The epoxy also serves to seal in the lubricant 1224.

A sheet metal or molded plastic assembly bracket 1226 holds the cover plate 1207"', the light modulation array 1206"', and the optical cavity 1202'" together around the edges. The assembly bracket 1226 is fastened with screws or indent tabs to add rigidity to the combined device. In some implementations, the light source 1204"' is molded in place by an epoxy potting compound.

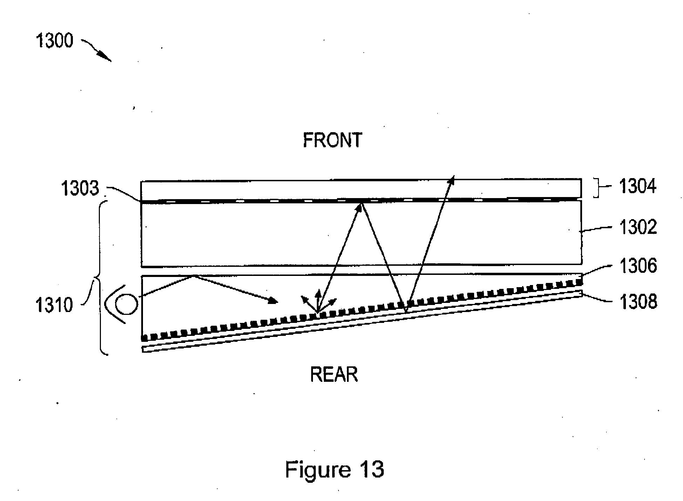

Figure 13 is a cross-sectional view of a seventh shutter-based spatial light modulator 1300 according to an illustrative embodiment of the invention. The seventh shutter-based spatial light modulator 1300 includes a substrate 1302 on which a light modulation array 1304 is formed, and a light guide 1306. The light modulation array 1304 includes a front reflective surface for the optical cavity 1310 of the spatial light modulator 1300. A reflective material is deposited or adhered to the rear side of the light guide to serve as a rear reflective surface 1308. The rear side of the light guide 1306 is angled or shaped with respect to the front side of the light guide 1308 to promote uniform distribution of light in the light modulation array 1304. The rear reflective surface 1308, however, is still partially facing the front reflective surface.

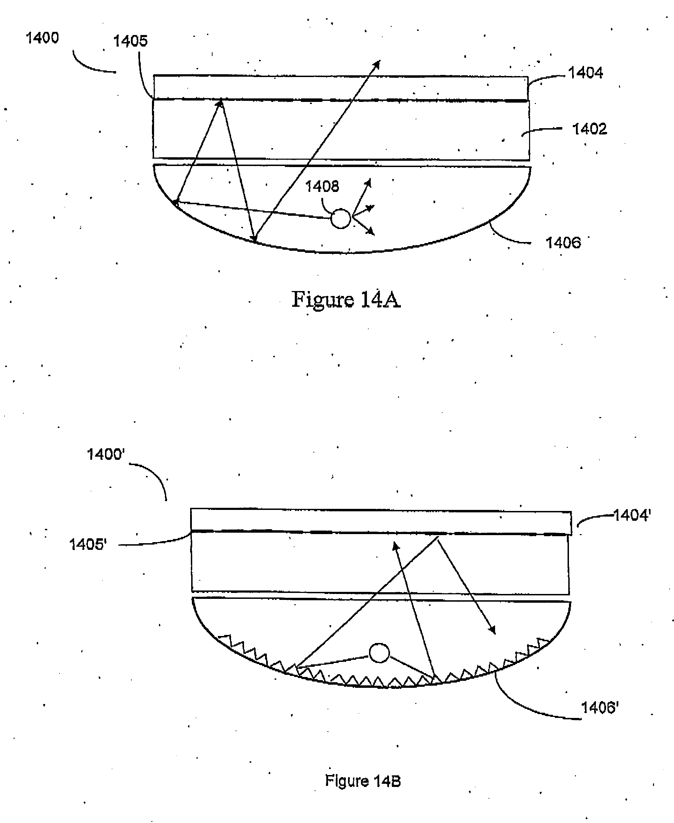

Figure 14A is a cross-sectional view of another spatial light modulator 1400, according to an illustrative embodiment of the invention. The spatial light modulator 1400 includes a substrate 1402 on which a light modulation array 1404 is formed. The light modulation array includes a reflective surface serving as a front reflective surface 1405 of an optical cavity. The spatial light modulation 1400 also includes a rear reflective surface 1406 substantially facing the rear side of the light modulation array 1404. A light source 1408 is positioned within the space formed between the substrate 1402 on which the light modulation array 1404 is formed and the rear reflective surface 1406. The space may also be filled with a substantially transparent plastic into which the light source 1408 is embedded.

Figure 14B is a cross-sectional view of another spatial light modulator 1400', similar to the spatial light modulator 1400 of Figure 14A. The spatial light modulator 1400' includes a substrate 1402' on which a light modulation array 1404' is formed. The light modulation array 1404' includes a reflective surface serving as a front reflective surface 1405 of an optical cavity. The spatial light modulation 1400' also includes a rear reflective surface 1406'. The rear reflective surface 1406' is corrugated, textured, or shaped to promote light distribution in the optical cavity formed by the reflective surfaces (i.e., the rear reflective surface 1406' and a reflective surface incorporated into the light modulation array 1404' of the spatial light modulator 1400'.

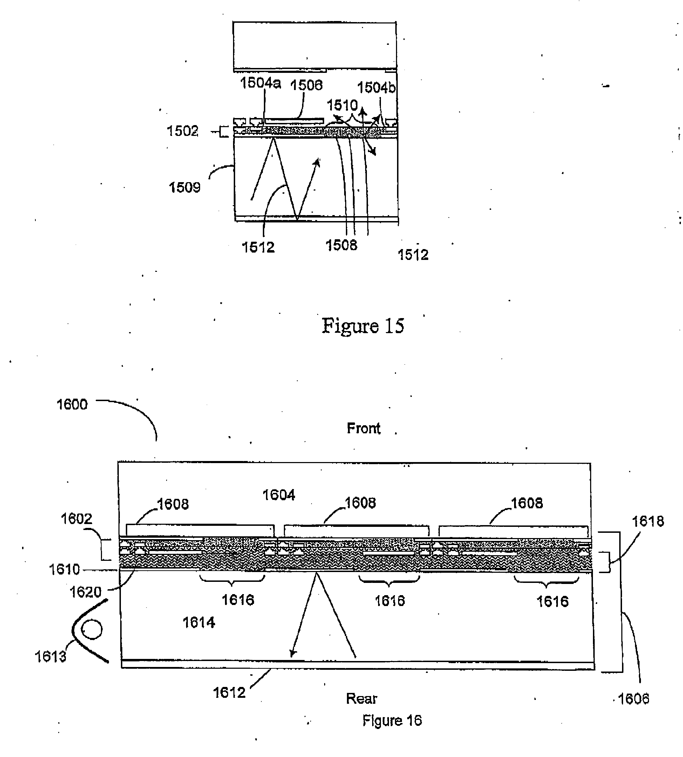

Figure 15 is a cross-sectional view of another shutter assembly 1500 for use in a light modulation array, according to an illustrative embodiment of the invention. The shutter assembly 1500 includes a metal column layer 1502, two row electrodes 1504a and 1504b, a shutter 1506, built on a substrate 1509. The shutter assembly 1500 also includes one or more light scattering elements 1508. As with other implementations of the shutter assemblies described above, an aperture 1510 is etched through the column metal layer 1502. The light scattering elements 1510 can include any change in the shape or geometry of the substrate 1509, such as by roughening, coating, or treating the surface of the substrate 1509. For example, the light scattering elements can include patterned remnants of the column metal 1502 having dimensions of about 1 to about 5 µm. The light scattering elements 1508 aid in extracting light 1512 trapped in the substrate 1508 due to total internal reflection. When such trapped light 1512 strikes one of the scattering elements 1508, the angle of the light's 1512 path changes. If the angle of the light's 1512 path becomes sufficiently acute, it passes out of the substrate 1509. If the shutter 1506 is in the open position, the scattered light 1512 can exit the aperture 1510 , and proceed to a viewer as part of an image.

Figure 16 is a cross sectional view of yet another spatial light modulator 1600 according to an illustrative embodiment of the invention. The spatial light modulator 1600 includes a light modulation array 1602 formed on the rear surface of a substrate 1604, facing the interior of an optical cavity 1606. The individual light modulation elements1608, such as the shutter assemblies 300, 300', 300", 300"', 400, 500, 600, 700, 800, and 800' described in Figures 3-8 or the liquid-crystal cells 902 described in Figure 9, making up the light modulation array 1602 are modified to reverse the sides of the light modulation elements 1608 that reflect or absorb light as compared to what is described with reference to Figures 4 and 5..

The optical cavity 1606 includes both a front reflective surface 1610, a rear reflective surface 1612, and a light guide 1614. Light is introduced into the optical cavity by a light source 1613. The front reflective surface 1610 is disposed on front-facing surface of the light guide 1614, providing a substantially continuous layer of high reflectivity and also defining light transmissive region 1616. The front reflective surface 1610 is separated from the light modulation array 1602 by a transparent gap 1618. The gap 1618 is preferably narrower than width of the light transmissive regions 1616, less than, for example, about 100 µm. The gap 1618 may be as narrow as about 10 µm wide, or even narrower.

In one implementation, the gap 1618 is filled with a lubricant 1620, such as the lubricant described in relation to Figure 3D. The lubricant 1620 may have a refractive index that substantially matches that of the light guide 1614 to facilitate the extraction of light from the light guide 1614.

The spatial light modulator 1600 can optionally forego a cover plate, since the shutter assembly is protected by the environment by the substrate 1604. If a cover plate is omitted, a black matrix, such as the black matrix 1110 of Figure 11, can be applied to the front-facing surface of the substrate 1604.

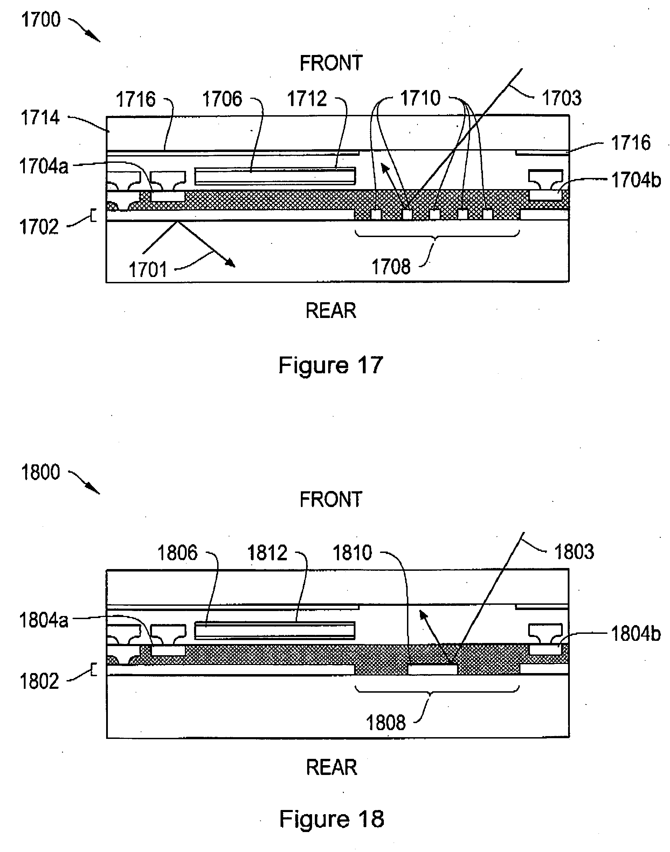

Figure 17 is a cross-sectional view of a transflective shutter assembly 1700, according to an illustrative embodiment of the invention, which can be incorporated into the spatial light modulators 1000, 1100, 1200, 1300, 1400, and 1500 described in Figures 10-15. The transflective shutter assembly 1700 forms images from both light 1701 emitted by a light source positioned behind the shutter assembly 1700 and from ambient light 1703. The transflective shutter assembly 1700 includes a metal column layer 1702, two row electrodes 1704a and 1704b, and a shutter 1706. The transflective shutter assembly 1700 includes an aperture 1708 etched through the column metal layer 1702. Portions of the column metal layer 1702, having dimensions of from about 1 to about 5 µm, are left on the surface of the aperture 1708 to serve as transflection elements 1710. A light absorbing film 1712 covers the top surface of the shutter 1706.

While the shutter is in the closed position, the light absorbing film 1712 absorbs ambient light 1703 impinging on the top surface of the shutter 1706. While the shutter 1706 is in the open position as depicted in Figure 17, the transflective shutter assembly 1700 contributes to the formation of an image both by allowing light 1701 to pass through the transflective shutter assembly originating from the dedicated light source and from reflected ambient light 1703. The small size of the transflective elements 1710 results in a somewhat random pattern of ambient light 1703 reflection.

The transflective shutter assembly 1700 is covered with a cover plate 1714, which includes a black matrix 1716. The black matrix absorbs light, thereby substantially preventing ambient light 1703 from reflecting back to a viewer unless the ambient light 1703 reflects off of an uncovered aperture 1708.

Figure 18 is a cross-sectional view of a second transflective shutter assembly 1800 according to an illustrative embodiment of the invention, which can be incorporated into the spatial light modulators 1000, 1100, 1200, 1300, 1400, and 1500 described in Figures 10-15. The transflective shutter assembly 1800 includes a metal column layer 1802, two row electrodes 1804a and 1804b, and a shutter 1806. The transflective shutter assembly 1800 includes an aperture 1808 etched through the column metal layer 1702. At least one portion of the column metal layer 1802, having dimensions of from about 5 to about 20 µm, remains on the surface of the aperture 1808 to serve as a transflection element 1810. A light absorbing film 1812 covers the top surface of the shutter 1806. While the shutter is in the closed position, the light absorbing film 1812 absorbs ambient light 1803 impinging on the top surface of the shutter 1806. While the shutter 1806 is in the open position, the transflective element 1810 reflects a portion of ambient light 1803 striking the aperture 1808 back towards a viewer. The larger dimensions of the transflective element 1810 in comparison to the transflective elements 1710 yield a a more specular mode of reflection, such that ambient light originating from behind the viewer is substantially reflected directly back to the viewer.

The transflective shutter assembly 1800 is covered with a cover plate 1814, which includes a black matrix 1816. The black matrix absorbs light, thereby substantially preventing ambient light 1803 from reflecting back to a viewer unless the ambient light 1803 reflects off of an uncovered aperture 1808.

Referring to both Figures 17 and 18, even with the transflective elements 1710 and 1810 positioned in the apertures 1708 and 1808, some portion of the ambient light 1703 and 1803 passes through the apertures 1708 and 1808 of the corresponding transflective shutter assemblies 1700 and 1800. When the transflective shutter assemblies 1700 and 1800 are incorporated into spatial light modulators having optical cavities and light sources, as described above, the ambient light 1703 and 1803 passing through the apertures 1708 and 1808 enters the optical cavity and is recycled along with the light introduced by the light source. In alternative transflective shutter assemblies, the apertures in the column metal are at least partially filled with a semi-reflective-semitransmissive material.

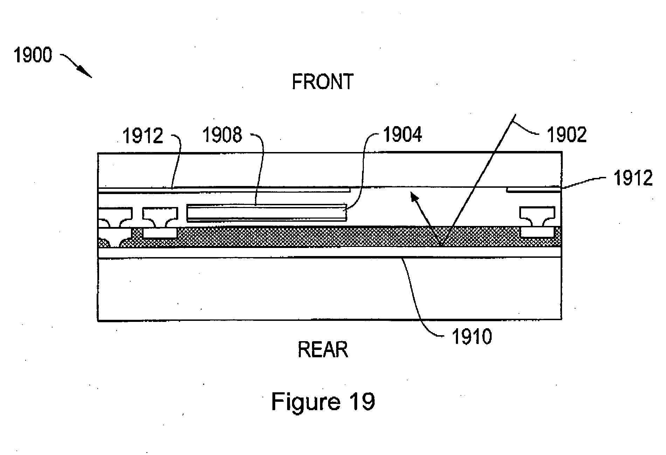

Figure 19 is a cross sectional view of a front reflective shutter assembly 1900 according to an illustrative embodiment of the invention. The front reflective shutter assembly 1900 can be used in a reflective light modulation array. The front reflective shutter assembly 1900 reflects ambient light 1902 towards a viewer. Thus, use of arrays of the front reflective shutter assembly 1900 in spatial light modulators obviates the need for a dedicated light source in viewing environments having high amounts of ambient light 1902. The front reflective shutter assembly 1900 can take substantially the same form of the shutter assemblies 300, 300', 300", 300"', 400, 500, 600, 700, 800 or 800' of Figures 3-8. However, instead of the column metal layer of the shutter assemblies 300, 400, 500, 600, 700, or 800 including an aperture to allow passage of light, the column metal layer includes a reflective surface beneath the position of a closed shutter 1904. The front-most layer of the reflective shutter assembly 1900, including at least the front surface of the shutter 1904, is coated in a light absorbing film 1908. Thus, when the shutter 1904 is closed, light 1902 impinging on the reflective shutter assembly 1900 is absorbed. When the shutter 1904 is open, at least a fraction of the light 1902 impinging on the reflective shutter assembly 1900 reflects off the exposed column metal layer 1910 back towards a viewer. Alternately the co lumn metal layer 1910 can be covered with an absorbing film while the front surface of shutter 1908 can be covered in a reflective film. In this fashion light is reflected back to the viewer only when the shutter is closed.

As with the other shutter assemblies and light modulators described above, the reflective shutter assembly 1900 can be covered with a coverplate 1910 having a black matrix 1912 applied thereto. The black matrix 1912 covers portions of the cover plate 1910 not opposing the open position of the shutter.

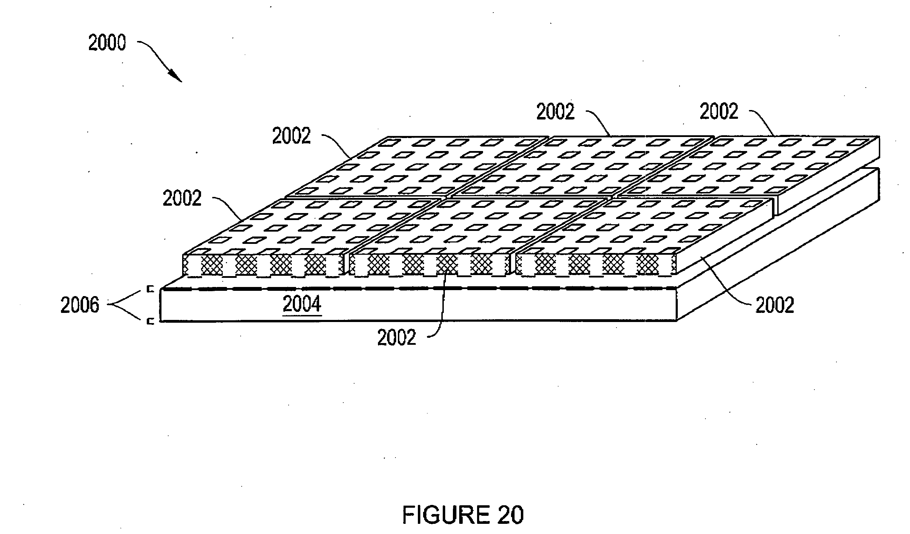

Figure 20 is an isometric view of a spatial light modulator 2000 including multiple light modulation arrays 2002, according to an illustrative embodiment of the invention. The size of several of the light modulation arrays 2002 described above is limited, somewhat, by the semiconductor manufacturing techniques used to construct them. However, light guides 2004 and reflective films 2006 can be formed on a significantly larger scale. A spatial light modulator which includes multiple, adjacently disposed light modulation arrays 2002, arranged over one or more light guides 2004, can generate a larger image, thereby circumventing these limitations.

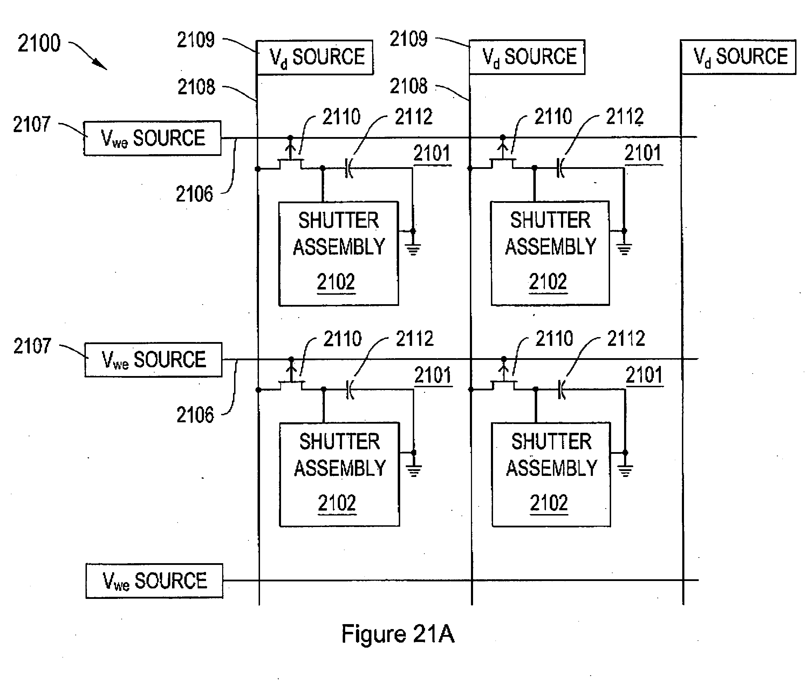

As described above, the shutter assemblies in the above-disclosed shutter assemblies can be controlled by an active matrix. Figure 21A is a conceptual diagram of an active control matrix 2100 suitable for inclusion in the display apparatus 100 for addressing an array of pixels 2140 (the "array 2140"). Each pixel 2101 includes an elastic shutter assembly 2102, such as the shutter assembly 122 of Figure 1C, controlled by an actuator 2103. Each pixel also includes an aperture layer 2150 that includes aperture holes 2154. Other electrical and mechanical configurations of shutter assemblies and the circuits that control them can be employed without departing from the scope of the invention.

The control matrix 2100 is fabricated as a diffused or thin-film-deposited electrical circuit on the surface of a substrate 2104 on which the shutter assemblies 2102 are formed. The control matrix 2100 includes a scan-line interconnect 2106 for each row of pixels 2101 in the control matrix 2100 and a data-interconnect 2108 for each column of pixels 2101 in the control matrix 2100. Each scan-line interconnect 2106 electrically connects a write-enabling voltage source 2107 to the pixels 2101 in a corresponding row of pixels 2101. Each data interconnect 2108 electrically connects a data voltage source, ("Vd source") 2109 to the pixels 2101 in a corresponding column of pixels 2101. In control matrix 2100, the data voltage V_{d} provides the majority of the energy necessary for actuation of the shutter assemblies 2102. Thus, the data voltage source 2109 also serves as an actuation voltage source.

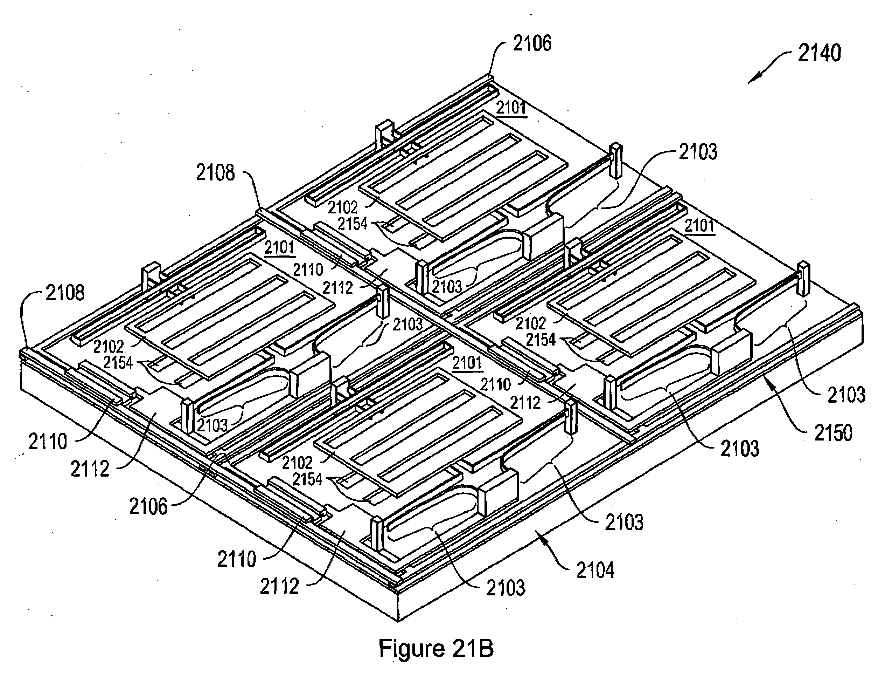

Figure 21B is an isometric view of a portion of the array of pixels 2140 including the control matrix 2100. Referring to Figures 21A and 21B, for each pixel 2101 or for each shutter assembly in the array of pixels 2140, the control matrix 2100 includes a transistor 2110 and a capacitor 2112. The gate of each transistor 2110 is electrically connected to the scan-line interconnect 2106 of the row in the array 2140 in which the pixel 2101 is located. The source of each transistor 2110 is electrically connected to its corresponding data interconnect 2108. The actuators 2103 of each shutter assembly include two electrodes. The drain of each transistor 2110 is electrically connected in parallel to one electrode of the corresponding capacitor 2112 and to the one of the electrodes of the corresponding actuator 2103. The other electrode of the capacitor 2112 and the other electrode of the actuator 2103 in shutter assembly 2102 are connected to a common or ground potential.

In operation, to form an image, the control matrix 2100 write-enables each row in the array 2140 in sequence by applying V_{we} to each scan-line interconnect 2106 in turn. For a write-enabled row, the application of V_{we} to the gates of the transistors 2110 of the pixels 2101 in the row allows the flow of current through the data interconnects 2108 through the transistors to apply a potential to the actuator 2103 of the shutter assembly 2102. While the row is write-enabled, data voltages V_{d} are selectively applied to the data interconnects 2108. In implementations providing analog gray scale, the data voltage applied to each data interconnect 2108 is varied in relation to the desired brightness of the pixel 2101 located at the intersection of the write-enabled scan-line interconnect 2106 and the data interconnect 2108. In implementations providing digital control schemes, the data voltage is selected to be either a relatively low magnitude voltage (i.e., a voltage near ground) or to meet or exceed Vₐₜ (the actuation threshold voltage). In response to the application of Vₐₜ to a data interconnect 2108, the actuator 2103 in the corresponding shutter assembly 2102 actuates, opening the shutter in that shutter assembly 2102. The voltage applied to the data interconnect 2108 remains stored in the capacitor 2112 of the pixel 2101 even after the control matrix 2100 ceases to apply V_{we} to a row. It is not necessary, therefore, to wait and hold the voltage V_{we} on a row for times long enough for the shutter assembly 2102 to actuate; such actuation can proceed after the write-enabling voltage has been removed from the row. The voltage in the capacitors 2112 in a row remain substantially stored until an entire video frame is written, and in some implementations until new data is written to the row.

In various implementations, shutter assemblies together with their corresponding actuators, can be made bi-stable. That is, the shutters in the shutter assembly can exist in at least two equilibrium positions (e.g. open or closed) with little or no power required to hold them in either position. More particularly, the shutter assemblies can be mechanically bi-stable. Once the shutter of such a shutter assembly is set in position, no electrical energy or holding voltage is required to maintain that position. The mechanical stresses on the physical elements of the shutter assembly can hold the shutter in place.

Shutter assemblies, together with their corresponding actuators, can also be made electrically bi-stable. In an electrically bi-stable shutter assembly, there exists a range of voltages below the actuation voltage of the shutter assembly, which if applied to a closed actuator (with the shutter being either open or closed), holds the actuator closed and the shutter in position, even if an opposing force is exerted on the shutter. The opposing force may be exerted by a spring, or the opposing force may be exerted by an opposing actuator, such as an "open" or "closed" actuator.

The pixels 2101 of the array 2140 are formed on a substrate 2104. The array includes an aperture layer 2150, disposed on the substrate, which includes a set of aperture holes 2154 for each pixel 2101 in the array 2140. The aperture holes 2154 are aligned with the shutter assemblies 2102 in each pixel.

The array 2140 can be fabricated in the following sequence of steps. First the aperture layer 2150 is deposited and patterned onto a transparent substrate 2104. Next, the control matrix, including an array of thin film switches or transistors 2110, is fabricated on top of the aperture layer 2150 along with capacitors 2112 and interconnects, such as scan-line interconnect 2106 or data interconnect 2108. The processes employed to fabricate the transistors 2110 and capacitors 2112 can be typical of those known in the art for manufacturing active matrix arrays for use in liquid crystal displays. In the final step, a micro-electro-mechanical (or MEMS) shutter assembly is formed on top of the array of thin film switches.

In one simple implementation, the aperture layer 2150 is electrically isolated by an intervening dielectric layer from the control matrix. The aperture layer 2150 can consist of thin film materials that are process compatible with the active matrix to be fabricated above it, but need not electrically connect to that active matrix. The aperture holes 2154 can be generally circular, elliptical, polygonal, serpentine, or irregular in shape.

In another implementation, the aperture layer 2150 is electrically connected to the control matrix. This connection can be made by means of a via etched through an intervening dielectric layer, such that interconnects in the control matrix make electrical contact to the aperture layer. If the aperture layer 2150 includes conducting materials, it can then act as a ground plane or a common interconnect for the control matrix.

In other implementations of the display, a separate aperture layer does not need to be fabricated as a first step in the sequence. The aperture holes may be fabricated instead using the same thin film materials and with the same processing steps used in the fabrication of active matrices or passive matrices directly onto glass substrates, as typically known in the art. Only the mask designs or pixel layouts need to be changed to accommodate the formation of aperture holes.

In another implementation, the aperture layer is fabricated as a last step in the processing sequence. The aperture layer is rigidly attached to the substrate but generally suspended above the shutter assembly, leaving room below for the free translational motion of the shutter assembly.

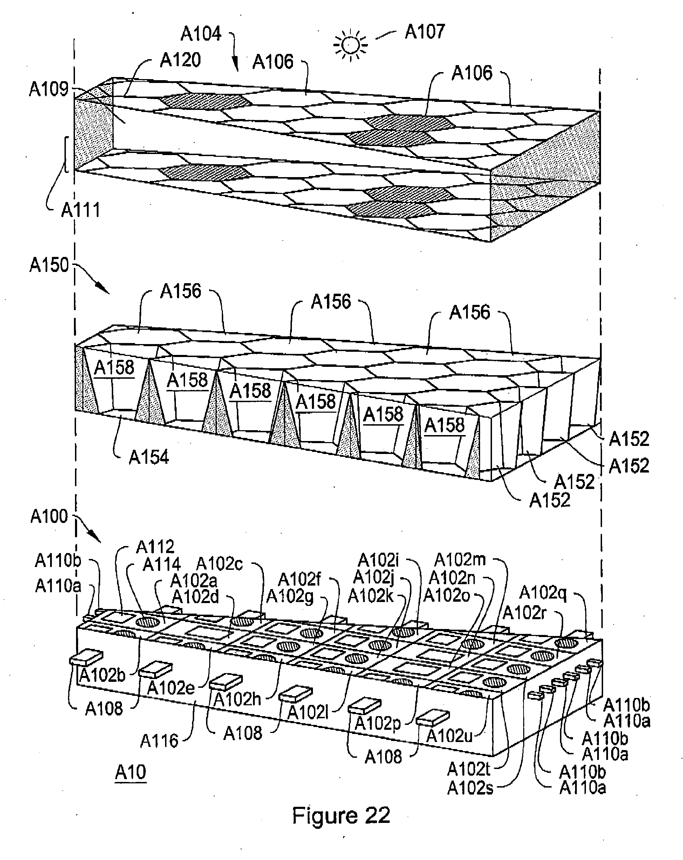

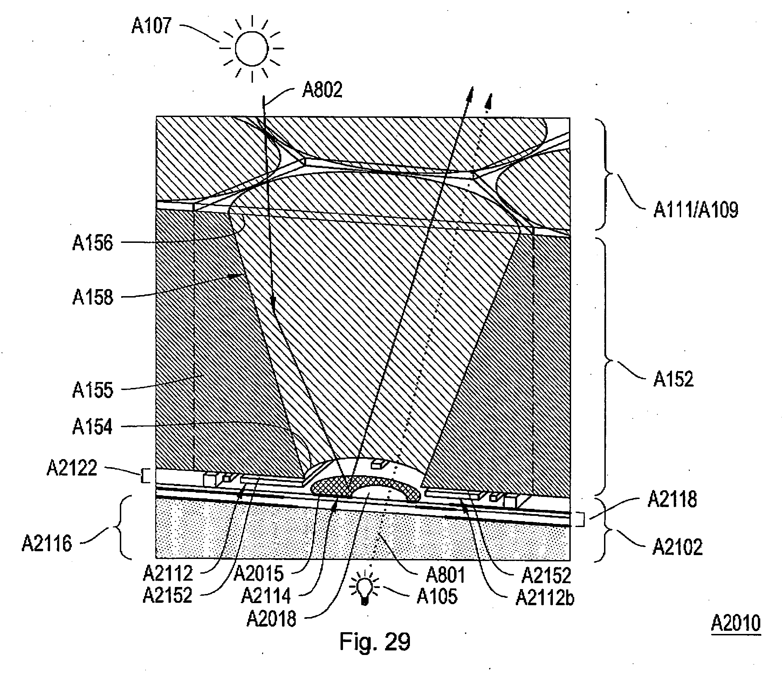

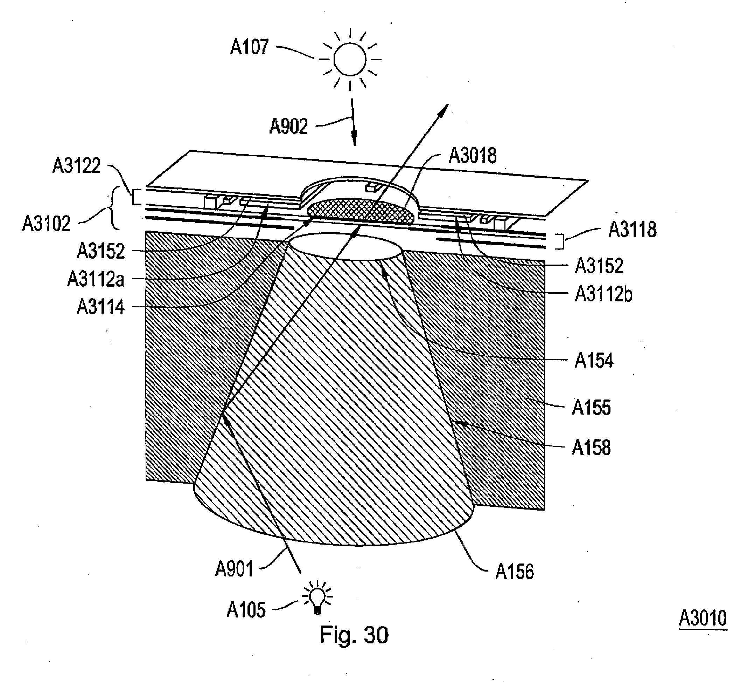

Figures 22-30 relate to additional MEMS-based display apparatuses. In particular, the MEMS-based shutter assemblies of Figures 22-30 include optical light concentrators. Figure 22 is an isometric conceptual view of a reflective display apparatus A10 including an array A100 of light modulators (also referred to as a "light modulation array A100"), an array A150 of light concentrators (also referred to as a "light concentration array A150"), according to an illustrative embodiment of the invention. The display apparatus A10 can alternatively be formed as a transflective or transmissive display. Such embodiments are described further in relation to Figures 29 and 30. Light modulation array A100 includes a plurality of shutter assemblies A102a-102u (generally "shutter assemblies A102") arranged in rows and columns (although segmented displays without rows and columns can also be employed without departing from the spirit and scope of the invention). In general, a shutter assembly A102 has two states, open and closed (although partial openings can be employed to impart grey scale, for example, as will be described in greater detail below). Each shutter assembly A102 includes a shutter A112 for selectively covering a corresponding exposable surface A114. Shutter assemblies A102a-c, A102e-m, and A102p-u are in the open state, exposing their corresponding exposable surfaces A114 to light which has passed through the light concentration array A150. Shutter assemblies A102d, A102n, and A102o are in the closed state, obstructing light from impacting their corresponding exposable surfaces A114 passing through light concentration array A150. In general, apparatus A10 selectively sets the states of shutter assemblies A102 to reflect light beams originating from an ambient light source A107, on the same side of the array as the viewer, back towards surface A103 for forming image A104 (see, also, Figure 7, for example). Alternatively, instead of being ambient to the apparatus A10, light source A107 could be provided as an integrated front light.

In one embodiment of the invention, each shutter assembly A102 of light modulation array A100 may correspond to an image pixel A106 in image A104. As described above, each shutter assembly A102 includes a shutter A112 and an exposable surface A114. In one implementation, the surface of the shutter A112 facing the light source A107 is reflective, and the exposable surface A114 is light-absorbing. To illuminate a pixel, the shutter A112 is at least partially closed to reflect light towards the surface A103. In an alternative implementation the surface of the shutter A112 facing the light source A107 absorbs light and the exposable surface A114 reflects light. In this implementation, a pixel A106 is brightest when the shutter A112 is fully open and darkest when the shutter A112 is fully closed.

In alternative implementations, display apparatus A10 may employ multiple shutter assemblies A102 for each image pixel A106. For example, the display apparatus may include three or four color-specific shutter assemblies A102 per image pixel A106. By selectively opening one or more of the color-specific shutter assemblies A102 corresponding to a particular image pixel A106, the display apparatus can generate a color image pixel A106 in image A104. In another example, display apparatus A10 may include shutter assemblies A102 that may provide for multiple partially open or closed states per image pixel A106 to provide grey scale in image A104.

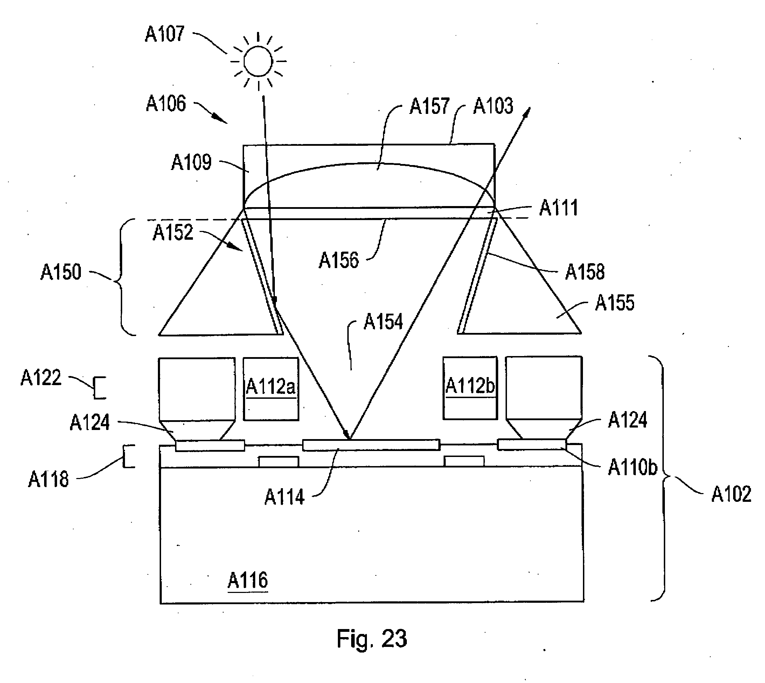

Exposable surface A114 may be formed in various ways from films, depositions, or any other suitable materials, or combinations or lack thereof which either reflect or absorb light, depending on the desired implementation of the shutter assembly A102. Similarly, each shutter A112 may be provided with a surface that reflects light therefrom or absorbs light therein, such that in conjunction with its associated exposable surface A114, light is appropriately reflected or absorbed, towards the viewer by assembly A102, as desired. Such materials are described further in relation to Figure 23. In still other implementations, display apparatus A10 may include other forms of light modulators, such as micromirrors, filters, polarizers, liquid crystal modulation cells, interferometric devices, and other suitable devices, instead of shutter assemblies A102 to modulate light to form an image.

Light concentration array A150 includes an array of optical elements for concentrating light onto respective light modulators in the array of light modulators A100 to increase the fraction of ambient light impacting on either the shutter A112 or exposable surface A114 depending on the position of the shutter A112. Various types of optical elements may be provided in light concentration array A150, including reflective light funnels, high numerical aperture lenses, and other nonimaging optical devices, for example. In the illustrative embodiment shown in Figure 22, light concentration array A150 includes an array of reflective light funnels A152. Each funnel A152 is associated with a respective shutter assembly A102 for concentrating light emitted from ambient light source A107, onto a particular region of the shutter assembly A102 corresponding to the funnel A152. Each reflective funnel A152 preferably includes a first optical opening A156 directed towards the surface A103, a second optical opening A154 directed towards its associated shutter assembly A102, and a wall A158 connecting the first optical opening A156 to the second optical opening A154.

The first optical opening A156 is preferably sized to match the size of an associated pixel A106, and the second optical opening A154 is preferably sized to match or to be slightly smaller than the size of the exposable surface A114 of its associated shutter assembly A102. Wall A158 is preferably highly reflective and the first optical opening A156 is preferably larger than the second optical opening A154 such that, to the greatest extent possible, beams of ambient light originating from ambient light source A107 may enter funnel A152 at first optical opening A156 from a wide range of angles and be reflected through second optical opening A154 onto a concentrated region of shutter assembly A102. This increases the fraction of available image forming light which gets modulated by each shutter assembly A102, thereby improving the contrast ratio of display apparatus A10. Moreover, funneling and concentrating an increased fraction of ambient light A107 onto a reflective element or elements of shutter assembly A102, display apparatus A10 is able to provide an increased brightness and luminous efficiency while eliminating the need for a backlight and additional power.

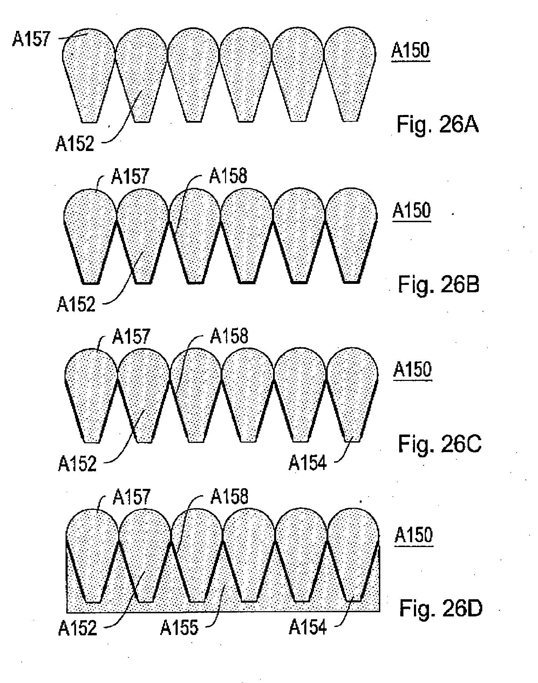

Wall A158 may be straight, curved, CPC (Compound Parabolic Collector)-shaped or any suitable combination thereof that provides for an optically efficient concentration of ambient light A107 and which also yields a high fill factor. Wall A158 may be conical or may include multiple sides, depending on the size and shape of the funnel's optical openings. Optical openings A154 and A156 may be of various shapes and sizes without departing from the spirit and scope of the invention. Optical openings A156 could be hexagonal while optical openings A154 could be circular, for example. Wall A158 may be provided with a reflective interior surface or with a transparent interior surface and an exterior reflective coating (as described in more detail below with respect to Figures 26A-27C).

Figure 23 is a cross-sectional diagram of one of the combined shutter-funnel assemblies of Figure 22, illustrating additional features of the display apparatus A10. With reference to Figures 22 and 23, display apparatus A10 may also include a cover sheet A109 and a filter array layer A111 between the viewer and light concentration array A150. Cover sheet A109 serves several functions, including protecting the light modulation array A100 from mechanical and environmental damage. Cover sheet A109 may be a thin transparent plastic, such as polycarbonate, or a glass sheet, for example. In certain embodiments, the cover sheet can be coated and patterned with a light absorbing material, also referred to as a black matrix A120. The black matrix A120 can be deposited onto the cover sheet A109 as a thick film acrylic or vinyl resin that contains light absorbing pigments. Black matrix A120 may absorb certain incident ambient light, thereby increasing the contrast of the image A104 formed by apparatus A10. The black matrix A120 can also function to absorb light escaping in a leaky or time-continuous fashion. Top surface A103 of cover sheet A109 may display image A104 to the viewer.

In one implementation, filter array A111, which may be deposited on cover sheet A109, may include color filters, for example, in the form of acrylic or vinyl resins, or thin film dielectrics. The filters may be deposited in a fashion similar to that used to form black matrix A120, but instead, the filters are patterned over the first optical openings A156 or the second optical openings A154 of cones A152 of light concentration array A150 to provide appropriate color filters for color-specific shutter assemblies A102. For example, display apparatus A10 may include multiple groupings of three or more color-specific shutter assemblies A102 (e.g., a red shutter assembly, a green shutter assembly, and a blue shutter assembly; a red assembly, a green shutter assembly, and a blue shutter assembly, and a white shutter assembly; a cyan shutter assembly, a magenta shutter assembly, and a yellow shutter assembly, etc. - although any other numerical and/or color combination of shutter assemblies for forming an image pixel may be provided without departing from the spirit and scope of the invention), such that each of the sub-pixels associated with the color-specific shutter assemblies A102 of a grouping may form an image pixel A106. There could be more than three color subpixesl to make up one full image pixel. By selectively opening one or more of the color-specific shutter assemblies A102 in a grouping corresponding to a particular pixel, display apparatus A10 can generate an image pixel A106 of various colors for image A104.

These color filters can be made in several ways. For example, materials with selective absorptivity can be patterned onto the surface of the display using well known photolithographic techniques, similar to the steps used in fabricating the shutters and passive matrix or active matrix components of the control matrix. Materials with dispersed metals and metal oxides or more generally specific absorptive materials can be photosensitive and defined like a photoresist. Alternatively, such absorptive centers can be applied in a thin film form and subsequently patterned with well known photolithography and etch processes. Furthermore, thin films based on interference properties of the thin film layers can be patterned on the substrate for forming interference filters over the representative red, blue, and green pixels, for example. Color filter materials can also be formed from organic dyes dispersed in a resin, such as polyvinyl acrylate.

The height, thickness, shape, and diameters of the optical openings of funnels A152 can vary according to the materials employed and the application. When the height of wall A158 of funnel A152 is small compared to the difference in size between optical openings A154 and A156, the slope of wall A158 is relatively shallow (i.e., wall A158 is substantially parallel to surface A103), and funnel A152 generally acts like a retro-reflector by reflecting most of ambient light A107 back towards the viewer without first concentrating the light onto the reflective region or regions of shutter assembly A102. On the other hand, when the height of wall A158 of funnel A152 is large compared to the difference in size between optical openings A154 and A156, the slope of wall A158 is relatively steep (i.e., wall A158 is substantially perpendicular to surface A103), resulting in a significant loss of light intensity due to multiple reflections of beams of ambient light A107 off of wall A158. In a preferred embodiment, the diameter of first optical opening A156 can range from between 75 and 225 µm, and is preferably 150 µm; the diameter of second optical opening A154 can range from between 25 and 75 µm, and is preferably 50 µm; and the height of cone A152 can range from between 100 and 300 µm, and is preferably 200 µm, for example, yielding slopes ranging from about 3.5 to 4.

In addition, a lens array may be provided with lenses A157 for focusing incoming ambient light into a respective funnel A152, and thereby onto the associated shutter assembly A102, thereby reducing both the number of reflections off of wall A158 and the chance of retro-reflection paths (note that no lenses A157 are shown in Figure 22 for the sake of clarity of the drawing). Lens A157 positioned at first optical opening A156 of funnel A152 may help direct and concentrate oblique incident light rays originating from ambient light source A107 into funnel A152 and thus onto the reflective region or regions of shutter assembly A102. Color filters of array A111 may be fixed to the bottom side of lenses A157, for example, as shown in Figure 23. As shown in Figure 26, the lens and optical funnel structures can be formed as one in a single molding process.

Color filtering can also be done at other locations in display apparatus A10. In addition to within the cover sheet A109, color filter array A111 may be applied at the second optical opening A154 of each reflective light funnel A152, for example. This embodiment may be especially preferable in the implementation where funnels A152 are filled with a hard transparent optical material (as described below in more detail with respect to Figures 26A-27C). Filter array A111 may alternatively be applied proximal to the reflective region or regions of shutter assembly A102. Generally, filters A111 of the filter array may be placed anywhere in the light path of a given pixel between surface A103 and the reflective surface of the shutter assembly A102.

Reflective wall A158 has a reflectivity above about 50%. For example, reflective wall A158 may have a reflectivity of 70%, 85%,A92%, 96%, or higher. Smoother substrates and finer grained metals yield higher reflectivities. Smooth surfaces may be obtained by molding plastic into smooth-walled forms. Fine grained metal films without inclusions can be formed by a number of vapor deposition techniques including sputtering, evaporation, ion plating, laser ablation, or chemical vapor deposition. Metals that are effective for this reflective application include, without limitation, Al, Cr, Au, Ag, Cu, Ni, Ta, Ti, Nd, Nb, Rh, Si, Mo, and/or any alloys or combinations thereof.

Alternatively, reflective wall A158 can be formed from a mirror, such as a dielectric mirror. A dielectric mirror is fabricated as a stack of dielectric thin films which alternate between materials of high and low refractive index. A portion of the incident light is reflected from each interface where the refractive index changes. By controlling the thickness of the dielectric layers to some fixed fraction or multiple of the wavelength and by adding reflections from multiple parallel interfaces, it is possible to produce a net reflective surface having a reflectivity exceeding 98%. Some dielectric mirrors have reflectivities greater than 99.8%. Dielectric mirrors can be custom-designed to accept a pre-specified range of wavelengths in the visible range and to accept a pre-specified range of incident angles. Reflectivities in excess of 99% under these conditions are possible as long as the fabricator is able to control the smoothness in the dielectric film stacks. The stacks can include between about 20 and about 500 films, for example.

The state of each shutter assembly A102 can be controlled using a passive matrix addressing scheme. Each shutter assembly A102 may be controlled by a column electrode A108 and two row electrodes A110a (a "row open electrode") and A110b (a "row close electrode"). In light modulation array A100, all shutter assemblies A102 in a given column may share a single column electrode A108. All shutter assemblies in a row may share a common row open electrode A110a and a common row close electrode A110b.

An active matrix addressing scheme, similar to that described above in relation to Figures 21A and 21B is also possible. Active matrix addressing (in which pixel and switching voltages are controlled by means of a thin film transistor array or an array of metal insulator metal ("MIM") diodes) is useful in situations in which the applied voltage must be maintained in a stable fashion throughout the period of a video frame. An implementation with active matrix addressing can be constructed with only one row electrode per shutter assembly row.

Referring to Figures 22 and 23, shutter assembly A102 is built on a glass, silicon, or plastic polymer substrate A116, which is shared with other shutter assemblies A102 of light modulation array A100. Substrate A116 may support as many as 4,000,000 shutter assemblies, arranged in up to about 2,000 rows and up to about 2,000 columns. A plurality of substrates may be arranged in an array for signage applications, for example.

Light modulation array A100 and its component shutter assemblies A102 are formed using standard micromachining techniques known in the art, including lithography; etching techniques, such as wet chemical, dry, and photoresist removal; thermal oxidation of silicon; electroplating and electroless plating; diffusion processes, such as boron, phosphorus, arsenic, and antimony diffusion; ion implantation; film deposition, such as evaporation (filament, electron beam, flash, and shadowing and step coverage), sputtering, chemical vapor deposition ("CVD"), epitaxy (vapor phase, liquid phase, and molecular beam), electroplating, screen printing, and lamination. See generally, Jaeger, Introduction to Microelectronic Fabrication (Addison-Wesley Publishing Co., Reading Mass., 1988); Runyan, et al., Semiconductor Integrated Circuit Processing Technology (Addison-Wesley Publishing Co., Reading Mass., 1990); Proceedings of the IEEE Micro Electro Mechanical Systems Conference, 1987-1998; and Rai-Choudhury, ed., Handbook of Microlithography, Micromachining & Microfabrication (SPIE Optical Engineering Press, Bellingham, Wash., 1997).

More specifically, multiple layers of material (typically alternating between metals and dielectrics) may be deposited on top of a substrate forming a stack. After one or more layers of material are added to the stack, patterns may be applied to a top most layer of the stack marking material either to be removed from, or to remain on, the stack. Various etching techniques, including wet and/or dry etches, may then be applied to the patterned stack to remove unwanted material. The etch process may remove material from one or more layers of the stack based on the chemistry of the etch, the layers in the stack, and the amount of time the etch is applied. The manufacturing process may include multiple iterations of layering, patterning, and etching.

The process may also include a release step. To provide freedom for parts to move in the resulting device, sacrificial material may be interdisposed in the stack proximate to material that will form moving parts in the completed device. An etch or other fugitive phase process removes much of the sacrificial material, thereby freeing the parts to move.

After release, the surfaces of the moving shutter may be insulated so that charge does not transfer between moving parts upon contact. This can be accomplished by thermal oxidation and/or by conformal chemical vapor deposition of an insulator such as Al₂O₃, Cr₂O₃, TiO₂, HfO₂, V₂O₅, Nb₂O₅, Ta₂O₅, SiO₂, or Si₃N₄, or by depositing similar materials using techniques such as atomic layer deposition. The insulated surfaces may be chemically passivated to prevent problems such as friction between surfaces in contact by chemical conversion processes such as fluoridation or hydrogenation of the insulated surfaces.

Dual compliant electrode actuators make up one suitable class of actuators for driving shutters A112 in shutter assemblies A102. It is to be noted that many other various types of actuators, including non-dual compliant electrode actuators, may be utilized for driving shutters A112 in shutter assemblies A102 without departing from the spirit and scope of the invention. A dual compliant beam electrode actuator, in general, is formed from two or more at least partially compliant beams. At least two of the beams serve as electrodes (also referred to herein as "beam electrodes"). In response to applying a voltage across the beam electrodes, the beam electrodes are attracted to one another from the resultant electrostatic forces. Both beams in a dual compliant beam electrode are, at least in part, compliant. That is, at least some portion of each of the beams can flex and or bend to aid in the beams being brought together. In some implementations the compliance is achieved by the inclusion of corrugated flexures or pin joints. Some portion of the beams may be substantially rigid or fixed in place. Preferably, at least the majority of the length of the beams are compliant.

Dual compliant electrode actuators have advantages over other actuators known in the art. Electrostatic comb drives are well suited for actuating over relatively long distances, but can generate only relatively weak forces. Parallel plate or parallel beam actuators can generate relatively large forces but require small gaps between the parallel plates or beams and therefore only actuate over relatively small distances. R. Legtenberg et. al. (Journal of Microelectromechanical Systems v. 6, p. 257, 1997) demonstrated how the use of curved electrode actuators can generate relatively large forces and result in relatively large displacements. The voltages required to initiate actuation in Legtenberg, however, are still substantial. As shown herein such voltages can be reduced by allowing for the movement or flexure of both electrodes.

In a dual compliant beam electrode actuator-based shutter assembly, a shutter is coupled to at least one beam of a dual compliant beam electrode actuator. As one of the beams in the actuator is pulled towards the other, the pulled beam moves the shutter, too. In doing so, the shutter is moved from a first position to a second position. In one of the positions, the shutter interacts with light in an optical path by, for example, and without limitation, blocking, reflecting, absorbing, filtering, polarizing, diffracting, or otherwise altering a property or path of the light. The shutter may be coated with a reflective or light absorbing film to improve its interferential properties The exposable surface A114 interacts with the light in the optical path by, for example, and without limitation, blocking, reflecting, absorbing, filtering, polarizing, diffracting, or otherwise altering a property or path of the light, in a fashion that is complimentarty to that of the optical effect provided by the shutter. For example, if one is absorbing the other is reflective or if one polarizes in one orientation the other surface polarizes in a perpendicular orientation..

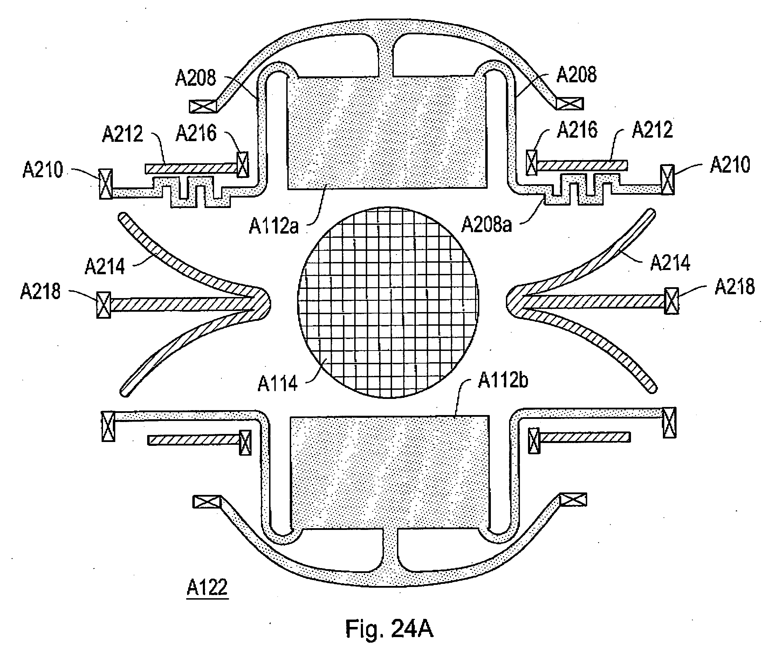

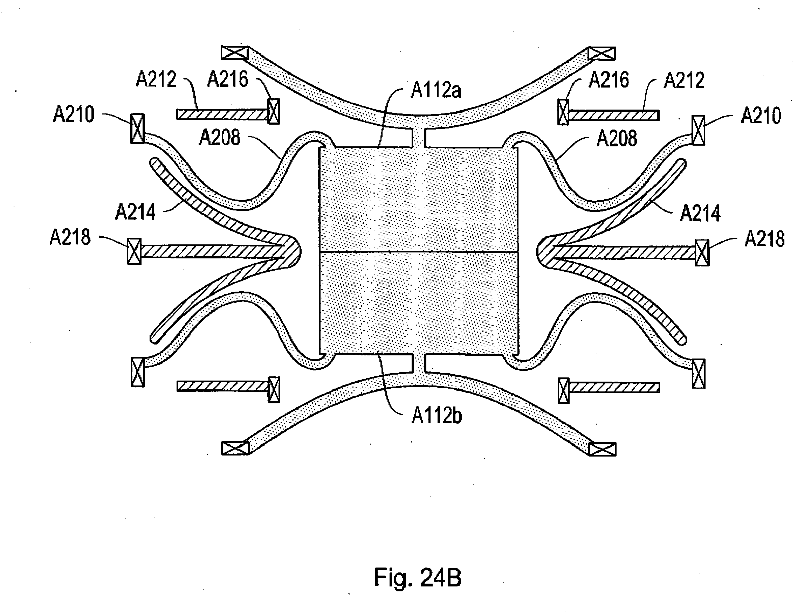

Figures 24A and 24B are plane views of a shutter assembly A102, in fully open and closed states, respectively, according to an illustrative embodiment of the invention. The shutter assembly A102 utilizes a dual compliant beam electrode actuators for actuation. Referring to Figures 23, 24A, and 24B, shutter assembly A102 modulates light to form an image by controllably moving a shutter A112, which includes two half-obstructing shutter portions A112a and A112b, in and out of an optical path of light between the viewer and exposable surface A114. Shutter portions A112a and A112b, when closed, substantially obstruct light from impacting the exposable surface 114. In one embodiment, instead of the shutter portions A112a and A112b being of about equal size, one shutter portion A112a or A112b is larger than that of the other shutter portion A112a or A112b, and they can be actuated independently. Thus by selectively opening zero, one, or both shutter portions A112a and A112, the shutter assembly A102 can provide for 4 levels of gray scale (e.g., off, one-third one, two-thirds on, and fully on).

Shutters A112a and A112b are each formed from a solid, substantially planar, body Shutters A112a and A112b can take virtually any shape, either regular or irregular, such that in a closed position shutters A112a and A112b sufficiently obstruct the optical path to exposable surface A114. In addition, shutters A112a and A112b must have a width consistent with the width of the exposable surface, such that, in the open position (as depicted in Figure 24A), sufficient light can be absorbed or reflected by exposable surface A114 to darken or illuminate a pixel, respectively.

As shown in Figures 24A and 24B, each of shutters A112a and A112b (shutter A112) couples to an end of each of two load beams A208. A load anchor A210, at the opposite end of each load beam A208 physically connects the load beam A208 to substrate A122 and electrically connects the load beam A208 to driver circuitry formed on the substrate. Together, the load beams A208 and load anchors A210 serve as a mechanical support for supporting the shutter A112 over the exposable surface A114, formed on the substrate.

The shutter assembly A102 includes a pair of drive beams A212 and a pair of drive beams A214, one of each located along either side of each load beam A210. Together, the drive beams A212 and A214 and the load beams A210 form an actuator. Drive beams A212 serve as shutter open electrodes and the other drive beams A214 serve as shutter close electrodes. Drive anchors A216 and A218 located at the ends of the drive beams A212 and A214 closest to the shutter A112 physically and electrically connect each drive beam A212 and A214 to circuitry formed or the substrate A122. In this embodiment, the other ends and most of the lengths of the drive beams A212 and A214 remain unanchored or free to move.

The load beams A208 and the drive beams A212 and A214 are compliant. That is, they have sufficient flexibility and resiliency such that they can be bent out of their unstressed ("rest") position or shape to at least some useful degree, without any significant fatigue or fracture. As the load beams A208 and the drive beams A212 and A214 are anchored only at one end, the majority of the lengths of the beams A208, A212, and A214 is free to move, bend, flex, or deform in response to an applied force. Corrugations (e.g., corrugations A208a on beams A208) may be provided to overcome axial stress due to foreshortening of the flexure and to provide higher deflections at a given voltage, for example.

Display apparatus A10 actuates shutter assembly A102 (i.e., changes the state of the shutter assembly A102) by applying an electric potential, from a controllable voltage source, to drive beams A212 or A214 via their corresponding drive anchors A216 or A218, with the load beams A208 being electrically coupled to ground or some different potential, resulting in a voltage across the beams A208, A212, and A214. The controllable voltage source, such as a passive or active matrix array driver, is electrically coupled to load beams A208 via a passive or active matrix as described above. The display apparatus A10 may additionally or alternatively apply a potential to the load beams A208 via the load anchors A210 of the shutter assembly A102 to increase the voltage. An electrical potential difference between the drive beams A212 or A214 and the load beams A208, regardless of sign or ground potential, will generate an electrostatic force between the beams which results in shutter movement transverse in the plane of motion.

The tiling or pixel arrangements for shutter assemblies need not be limited to the constraints of a square array. Dense tiling can also be achieved using rectangular, rhombohedral, or hexagonal arrays of pixels, for example, all of which find applications in video and color imaging displays.

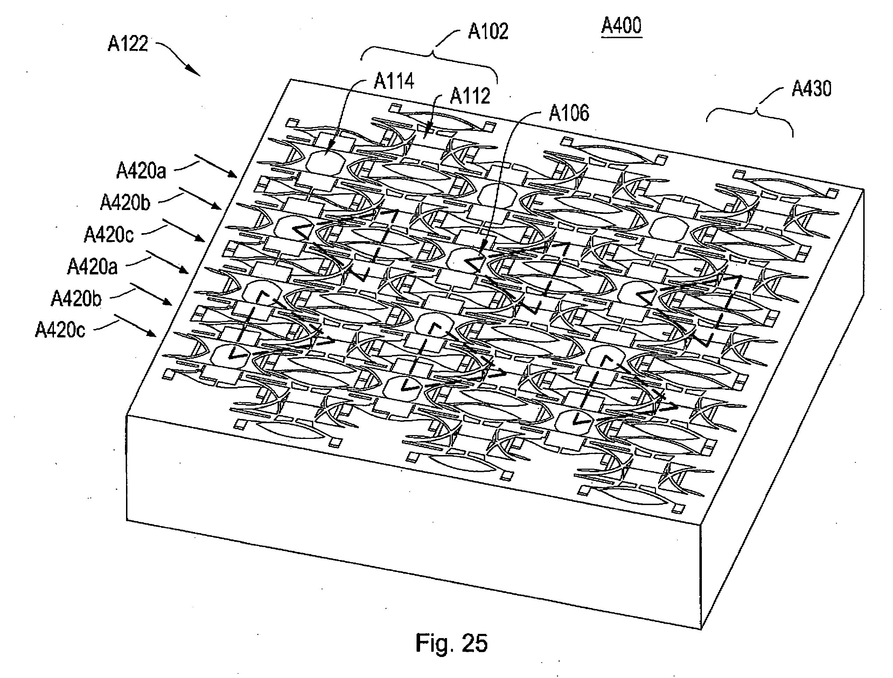

Figure 25 demonstrates a preferred method of tiling shutter assemblies into an array of pixels to maximize the aperture ratios in dense arrays and minimize the drive voltages. Figure 25 depicts a tiling A400 of dual compliant zipper electrode actuator-based shutter assemblies A102 that are tiled on the substrate A122 to form image pixels A106 from three generally rectangular shutter assemblies A102. The three shutter assemblies A102 of each pixel A106 may be independently or collectively controlled.

Preferably shutter assemblies A102 are packed close together with as little dead area therebetween as possible to provide an increased fill factor. As shown in Figure 25, portions of shutter assemblies A102 can be interleaved with the gaps between portions of neighboring shutter assemblies A102. The interleaved arrangement of tiling A400 can be mapped onto a square arrangement of rows and columns, if desired. As shown, a repeating sequence of columns A420a, A420b, and A420c may each be associated with sub-pixels having a specifically colored filter A111 (e.g., red, green, and blue, respectively). Also, two interleaved rows of shutter assemblies A102 are included in a single row electrode A430. The interleaving can be utilized to provide for hexagonal packing of the pixels A106.

In other alternate implementations, the display apparatus A102 can include multiple (for example, between 1 and 10) with corresponding exposable surfaces A114 and corresponding shutters A112 per image pixel A106. In changing the state of such an image pixel A106, the number of actuators activated can depend on the switching voltage that is applied or on the particular combination of row and column electrodes that are chosen for receipt of a switching voltage. Implementations are also possible in which partial openings of an aperture are made possible in an analog fashion by providing switching voltages partway between a minimum and a maximum switching voltage. These alternative implementations provide an improved means of generating a spatial grey scale, for example.

Funnels A152 of light concentration array A150 may be micro-molded, embossed, or investment casted from a very large family of polymers like acrylics, imides, and acetates, for example, as well as plastics, glass, or UV curing epoxies. Micro-molding may include subtractive techniques, such as photolithography, and etching or embossing techniques in which the inverse pattern is made in a hard material and subsequently aligned with and pressed into a soft material on the surface that can subsequently be cured or hardened. Alternatively, funnels A152 may be fabricated, for example, out of photo-imageable material, such as Novalac or PMMA or Polyimide amongst many polymers that can be cross-linked, or whose cross-links can be broken, with the aid of light. See, for example, "Plastic vs. Glass Optics: Factors to Consider (part of SPIE 'Precision Plastic Optics' short course note)," of November 17, 1998, by Alex Ning, Ph.d.; "Micro Investment Molding: Method for Creating Injection Molded Hollow Parts," Proceedings of IMECE2005, of November 5-11, 2005, by Julian M. Lippmann et al.; and "In-Plane, Hollow Microneedles Via Polymer Investment Molding, of 2005, by Julian M. Lippmann et al.

In one embodiment, referring to Figures 26A-26D, an array A150 of funnels A152 may be formed first by molding solid cones A152 and optional lens structures A157 out of polycarbonate, polymethylmethacrylate, silicone based polymers ("PDMS"), or polyimide, or any other suitable material, for example (see, e.g., Figure 26A). Then a reflective layer may be coated onto the external and bottom surface of each cone A152 (see, e.g., Figure 26B), preferably from the underside of array A150, for forming reflective wall A158. Next, the reflective layer coated on the bottom of cones A152 is polished off to provide for second optical opening A154 of each cone (see, e.g., Figure 26C). Optionally, polycarbonate, polymethylmethacrylate, silicone based polymers ("PDMS"), or polyimide, or any other suitable material, for example, may be provided as a backfill A155 between cones A152 such that they are formed into a single filled sheet (see, e.g., Figure 26D). In the embodiment where cones A152, lenses A157, and cover sheet A109 are all formed in one layer, filter arrays A111 may be provided at second optical opening A154 of each cone A152, for example.

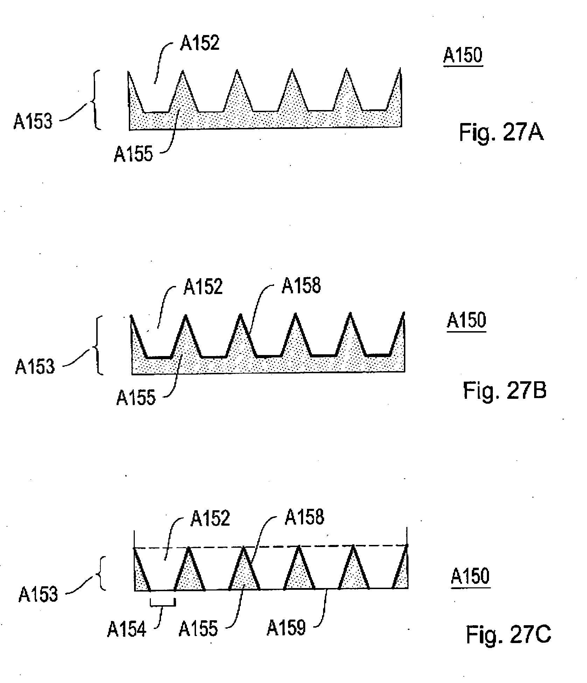

Alternatively, in another embodiment, referring to Figures 27A-27C, an array of depressions, in the form of hollow funnels A152 can be formed, for example, in a sheet A153 of photo-imageable material A155, such as Novalac or PMMA or Polyimide amongst many polymers, for example (see, e.g., Figure 27A). Then a reflective material may be coated onto the inside of each depression to form reflective wall A158 (see, e.g., Figure 27B). Next, the bottom of the sheet A153 may be polished off to form an optical opening, the second optical opening A154, at the bottom of the hollow funnels A152 (see, e.g., Figure 27C). Finally, and optionally, polycarbonate, polymethylmethacrylate, silicone based polymers ("PDMS"), or polyimide, or any other suitable material, for example, may be provided as a backfill A159 within cones A152 such that they are formed into a single filled sheet (see, e.g., the region surround by dotted lines in Figure 27C). In an alternative implementation of this method, the depressions are punched through the entirety of the sheet A153, preventing reflective material from collecting at the tip of the hollow funnels A152, thereby obviating the need to remove any material to form the second optical opening A154.

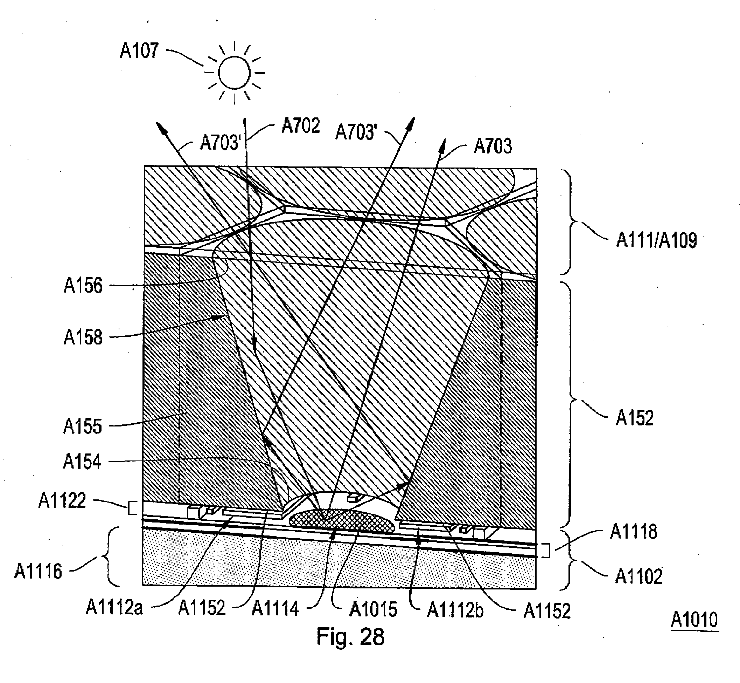

Figure 28 is a partial isometric cross-sectional diagram, of one of the combined shutter, funnel, and pixel assemblies of Figure 22, illustrating additional features of the display apparatus A10 when the apparatus is implemented as a reflective-type display apparatus A1010, according to an illustrative embodiment of the invention. Reflective display apparatus A1010 can be used with a reflective light modulation array including an array of reflective shutter assemblies A1102. Reflective shutter assembly A1102 reflects ambient light (e.g., typical ambient light beam A702) originating from ambient light source A107 towards a viewer through filter array layer A111 and cover sheet A109 (note that portions of layer A111 and sheet A109, including lens A157 are not shown in Figure 28 for the sake of simplicity of the drawing).

Reflective shutter assembly A1102 can take substantially the same form as shutter assembly A102 of Figures 22-25. The front-most layer of reflective shutter assembly A1102 facing the viewer, including at least the front surface of shutters A1112a and A1112b, is coated in a light absorbing film A1152. Thus, when shutter A1112 is closed, light A702 concentrated by funnel A152 on reflective shutter assembly A1102 is absorbed by film A1152. When shutter A1112 is at least partially open (as depicted in Figure 28), at least a fraction of the light A702 concentrated on reflective shutter assembly A1102 reflects off an exposed reflective surface A1015 (i.e., exposable surface A1114) of layer A1118 back towards the viewer through funnel A152 as specular beams A703. Reflective surface A1015 has a reflectivity above about 50%. For example, reflective surface A1015 may have a reflectivity of 70%, 85%, 92%, 96%, or higher. Smoother substrates and finer grained metals yield higher reflectivities. Smooth surfaces may be obtained by molding plastic into smooth-walled forms. Fine grained metal films without inclusions can be formed by a number of vapor deposition techniques including sputtering, evaporation, ion plating, laser ablation, or chemical vapor deposition. Metals that are effective for this reflective application include, without limitation, Al, Cr, Au, Ag, Cu, Ni, Ta, Ti, Nd, Nb, Rh, Si, Mo, and/or any alloys or combinations thereof.

Alternatively, reflective surface A1015 can be formed from a mirror, such as a dielectric mirror. A dielectric mirror is fabricated as a stack of dielectric thin films which alternate between materials of high and low refractive index. A portion of the incident light is reflected from each interface where the refractive index changes. By controlling the thickness of the dielectric layers to some fixed fraction or multiple of the wavelength and by adding reflections from multiple parallel interfaces, it is possible to produce a net reflective surface having a reflectivity exceeding 98%. Some dielectric mirrors have reflectivities greater than 99.8%. Dielectric mirrors can be custom-designed to accept a pre-specified range of wavelengths in the visible range and to accept a pre-specified range of incident angles. Reflectivities in excess of 99% under these conditions are possible as long as the fabricator is able to control the smoothness in the dielectric film stacks. The stacks can include between about 20 and about 500 films, for example. Alternately layer A1118 can be covered with an absorptive film while the front surface of shutter A1112 can be covered in a reflective film. In this fashion, light is reflected back to the viewer through funnel A152 only when shutter A1112 is at least partially closed.

Reflective surface A1015 may be roughened in order to provide diffusiveness thereon for combating glare. This roughening can be done by any one of several processes, including mechanical, chemical, or deposition processes. Roughening the reflective surface causes reflected light to be scattered at various angles into funnel A152, and thus at various angles towards the viewer as diffuse beams A703', thereby creating wider viewing angles and increasing the ratio of diffuse (Lambertian) to specular reflections.

The absorbing film A1152 can be formed, for example from a metal film. Most metal films absorb a certain fraction of light and reflect the rest. Some metal alloys which are effective at absorbing light, include, without limitation, MoCr, MoW, MoTi, MoTa, TiW, and TiCr. Metal films formed from the above alloys or simple metals, such as Ni and Cr with rough surfaces can also be effective at absorbing light. Such films can be produced by sputter deposition in high gas pressures (sputtering atmospheres in excess of 2.7Pa (20 mtorr)). Rough metal films can also be formed by the liquid spray or plasma spray application of a dispersion of metal particles, following by a thermal sintering step. A dielectric layer such as a dielectric layer A404 is then added to prevent spalling or flaking of the metal particles.

Semiconductor materials, such as amorphous or polycrystalline Si, Ge, CdTe, InGaAs, colloidal graphite (carbon) and alloys such as SiGe are also effective at absorbing light. These materials can be deposited in films having thicknesses in excess of 500 nm to prevent any transmission of light through the thin film. Metal oxides or nitrides can also be effective at absorbing light, including without limitation CuO, NiO, Cr2O3, AgO, SnO, ZnO, TiO, Ta2O5, MoO3, CrN, TiN, or TaN. The absorption of these oxides or nitrides improves if the oxides are prepared or deposited in non-stoichiometric fashion - often by sputtering or evaporation - especially if the deposition process results in a deficit of oxygen in the lattice. As with semiconductors, the metal oxides should be deposited to thicknesses in excess of 500 nm to prevent transmission of light through the film.

A class of materials, called cermets, is also effective at absorbing light. Cermets are typically composites of small metal particles suspended in an oxide or nitride matrix. Examples include Cr particles in a Cr2O3 matrix or Cr particles in an SiO2 matrix. Other metal particles suspended in the matrix can be Ni, Ti, Au, Ag, Mo, Nb, and carbon. Other matrix materials include TiO2, Ta2O5, Al2O3, and Si3N4.

It is possible to create multi-layer absorbing structures using destructive interference of light between suitable thin film materials. A typical implementation would involve a partially reflecting layer of an oxide or nitride along with a metal of suitable reflectivity. The oxide can be a metal oxide e.g. CrO2, TiO2, Al2O3 or SiO2 or a nitride like Si3N4 and the metal can be suitable metals such as Cr, Mo, Al, Ta, Ti. In one implementation, for absorption of light entering from the substrate a thin layer, ranging from 10- 500 nm of metal oxide is deposited first on the surface of substrate A402 followed by a 10-500 nm thick metal layer. In another implementation, for absorption of light entering from the direction opposite of the substrate, the metal layer is deposited first followed by deposition of the metal oxide. In both cases the absorptivity of bi-layer stack can be optimized if the thickness of the oxide layer is chosen to be substantially equal to one quarter of 0.55 µm divided by the refractive index of the oxide layer.

In another implementation, a metal layer is deposited on a substrate followed by a suitable oxide layer of calculated thickness. Then, a thin layer of metal is deposited on top of the oxide such that the thin metal is only partially reflecting (thicknesses less than .02 µm). Partial reflection from the metal layer will destructively interfere with the reflection from substrate metal layer and thereby produce a black matrix effect. Absorption will be maximized if the thickness of the oxide layer is chosen to be substantially equal to one quarter of 0.55 µm divided by the refractive index of the oxide layer.

Figure 29 is a partial isometric cross-sectional diagram, of a portion A2010 of a transflective display, according to an illustration embodiment of the invention. Transflective display apparatus A2010 is similar to reflective display apparatus A10, but transflective display apparatus forms images from a combination of reflected ambient light and transmitted light, emitted from an integral back light A105.

Transflective display apparatus A2010 can be used with a transflective light modulation array including an array of transflective shutter assemblies A2102 to modulate both light (e.g., typical backlight beam A801) emitted by backlight A105 and from ambient light (e.g., typical ambient light beam A802) originating from ambient light source A107 towards a viewer through filter array layer A111 and cover sheet A109 to form an image (note that portions of layer A111 and sheet A109, including lens A157 are not shown in Figure 29 for the sake of simplicity of the drawing).

Transflective shutter assembly A2102 can take substantially the same form as shutter assembly A102 of Figures 22-25. However, layer A2118 of assembly A2102 includes a reflective surface A2015 and one or more transmissive apertures A2018 etched through reflective surface A2015 beneath the position of closed shutter A2112 to collectively form exposable surface A2114. At least one portion of reflective surface A2015, having dimensions of from about 2 to about 20 µm, remains beneath the position of closed shutter A2112. The front-most layer of transflective shutter assembly A2102 facing the viewer, including at least the front surface of shutters A2112a and A2112b, is coated in a light absorbing film A2152. Thus, when shutter A2112 is closed, ambient light A802 concentrated by funnel A152 onto transflective shutter assembly A2102 is absorbed by film A2152. Likewise, when shutter assembly A2112 is closed the trasnmissino of light through the trasnmissive aperture A2018 in exposable surface A2114 is blocked. When shutter A2112 is at least partially open (as depicted in Figure 29), transflective shutter assembly A2102 contributes to the formation of an image both by allowing at least a fraction of backlight-emitted-light A801 to transmit through transmissive apertures A2018 in exposable surface A2114 towards the viewer through funnel A152 and by allowing at least a fraction of the ambient light A802 concentrated onto transflective shutter assembly A2102 to reflect off of the exposed reflective surface or surfaces A2015 of exposable surface A2114 back towards the viewer through funnel A152. The larger the dimensions of the exposed reflective surface or surfaces A2015 of exposable surface A2114 in comparison to the transmissive apertures A2018 become, a more specular mode of reflection is yielded, such that ambient light originating from ambient light source A107 is substantially reflected directly back to the viewer. However, as described above with respect to surface A1015, reflective surface or surfaces A2015 may be roughened in order to provide diffusiveness thereon for combating glare and widening viewing angles of the display A2010.

Even with funnels A152 designed to concentrate ambient light A802 onto one or more of exposed reflective surfaces A2015 that are positioned among transmissive apertures A2018 on exposable surface A2114, some portion of ambient light A802 may pass through apertures A2018 of transflective shutter assembly A2102. When transflective shutter assembly A2102 is incorporated into spatial light modulators having optical cavities and light sources, the ambient light A802 passing through apertures A2018 enters an optical cavity and is recycled along with the light A801 introduced by backlight A105. In alternative transflective shutter assemblies, the transmissive apertures in the exposable surface are at least partially filled with a semi-reflective-semitransmissive material or alternately the entire exposable area A2114 con be formed of a semitransmissive semi-reflective material to achieve the same net effect as if portions of the areas are defined as reflective and transmissive.

Figure 30 is a partial isometric cross-sectional diagram of a portion of transmissive display apparatus A3010, according to an illustrative embodiment of the invention. As with display apparatus A10 and A2010, transmissive display apparatus A3010 includes an array of shutter assemblies A3102, and an array of light concentrators. In contrast to the previously described display apparatus A10 and A2010, in display apparatus A3010, the array of light modulators is positioned between the array of light concentrators and a viewer. Transmissive shutter assemblies A3102 modulate light (e.g., typical backlight beam A901) emitted by a backlight A105 towards a viewer. Note that color filter layer A111 and cover sheet A109 are not shown in Figure 30 for the sake of simplicity of the drawing. The filters A111 can be located within display apparatus A3010 anywhere between the backlight and the front of the display apparatus A3010.

Transmissive shutter assembly A3102 can take substantially the same form as shutter assembly A102 of Figures 22-25. However, layer A3118 of assembly A3102 includes a transmissive surface A3018 beneath the position of closed shutter A3112 to form exposable surface A3114. The front-most layer of transmissive shutter assembly A3102 facing the viewer, including at least the front surface of shutters A3112a and A3112b, is coated in a light absorbing film A3152. Thus, when shutter A3112 is closed, ambient light A902 is absorbed by film A3152 and is not reflected back towards the viewer. When shutter A3112 is at least partially open (as depicted in Figure 30), transmissive shutter assembly A3102 contributes to the formation of an image by allowing at least a fraction of backlight beams A901 to transmit through transmissive surface A3018 (i.e., exposable surface A3114) towards the viewer. An additional light blocking area can be applied around of the transmissive aperture A3114 so that stray light from the backlight cannot get through the light modulation layer un-modulated.

As shown, funnel A152 of light concentration array A150 is provided between shutter assembly A3102 and backlight A105 to concentrate backlight beams A901 entering first optical opening A156 and through second optical opening A154 onto the transmissive region (i.e., transmissive surface A3018 of exposable surface A3114) of transmissive shutter assembly A3102. Thus, use of arrays of transmissive shutter assembly A3102 in display apparatus A3010 with such a configuration of funnels A152 increases the fraction of image forming light (i.e., backlight beams A901) from backlight A105 that gets concentrated onto the modulating surface (i.e., exposable surface A3114) of the display apparatus. The array of light funnels A152 may also serve as a front reflective layer for the backlight to provide for light recycling in the backlight, obviating the need for a separate reflective layer. The light entering the funnels at angles not conducive to making it to the surface A3114 will be reflected back out of the light funnels into the backlight for recycling until such time as it reaches an angle conducive to exit.

It should be noted that, although apparatus and methods for displays utilizing light concentration arrays of the invention have been described as utilizing an array of reflective light funnels (e.g., funnels A152), the invention also relates to apparatus and methods for displays that utilize light concentration arrays of other types of optical elements (i.e., not funnels) for concentrating available image forming light onto an array of light modulators to maximize the contrast ratio of the display. This may be accomplished, for example, with the previously described display apparatus embodiments by replacing each reflective light funnel A152 with a high numerical f-number aperture lens. For example, a high aperture lens, similar to lens A157 shown in Figure 23, could be utilized without cones A152 in an array A150, according to an alternative embodiment of the invention. Also, while many implementations described herein disclose the utilization of both lens A157 and light funnels A152, the lens are optional in many implementations.

## Claims

1. A display comprising a first reflective surface, a second reflective surface (1212"), at least partially facing the first reflective surface and reflecting light towards the first reflective surface, the first and second surfaces forming an optical cavity (1202"), a light guide (1208") and an array of light modulators (1206"), the display being **characterized in that**:
the first reflective surface defines a plurality of light-transmissive regions (1222') laterally separated by reflective regions,
the light guide (1208") is positioned within the cavity (1202") for distributing light (1214) substantially throughout the cavity (1202"), and
the array of light modulators (1206") selectively obstruct light leaving the light guide towards a front of the display through the plurality of light-transmissive regions, and **in that** light modulators in the array of light modulators correspond to respective light-transmissive regions of the plurality of light-transmissive regions.

2. The display of claim 1, wherein one of the reflective surfaces is formed from one of a mirror, a dielectric mirror, and a metallic film.

3. The display of claim 1, wherein at least one of the light-transmissive regions comprises an aperture.

4. The display of claim 1, wherein the array of light modulators comprises one of: a plurality of MEMS-based light modulators or a plurality of MEMS-based shutters assemblies.

5. The display of claim 1, wherein the first reflective surface is substantially parallel to, and opposes the second reflective surface.

6. The display of claim 1, wherein the first reflective surface is at least partially transverse with respect to the second reflective surface.

7. The display of claim 1, wherein the array of light modulators comprises a plurality of shutters arranged in a plane, at least one of the shutters having a first position substantially in the plane allowing the passage of light through a corresponding one of the plurality of light-transmissive regions and a second position substantially in the plane to obstruct light reflected from second reflective surface.

8. The display of claim 1, wherein the array of light modulators comprises a plurality of shutters arranged in a plane, at least one of the shutters having a first position substantially in the plane to obstruct light reflected from the second reflective surface and a second position in which at least part of the shutter is substantially out of the plane to allow the passage of light through the corresponding one of the plurality of light-transmissive regions.

9. The display of claim 1, wherein the first reflective surface is disposed on the surface of the light guide.

10. The display of claim 9, comprising a substrate on which the array of light modulators is disposed.

11. The display of claim 10, wherein the substrate is substantially transparent.

12. The display of claim 10, comprising a spacer for keeping the light guide and the substrate a predetermined distance apart from one another, thereby forming a gap.

13. The display of claim 10, wherein the light guide is coupled to the substrate.

14. The display of claim 1, comprising a substrate upon which the first reflective surface and the array of light modulators are disposed.

15. The display of claim 14, wherein the first reflective surface comprises a reflective film.

16. The display of claim 1, wherein the second reflective surface is disposed on a side of the light guide which is opposite to a side of the light guide nearest the first reflective surface.

17. The display of claim 1, wherein the array of light modulators comprises liquid crystal components.

18. The display of claim 1, comprising a light source (1208") for introducing light into the light guide.

19. The display of claim 18, wherein the light source comprises a light emitting diode.

20. The display of claim 18, wherein the light source comprises a plurality of light sources, each emitting one of at least three colors of light.

21. The display of claim 1, comprising a substrate (1210;1610) separate from the light guide (1208;1614), on which the first reflective layer is disposed.

22. The display of claim 21, wherein the light guide and the substrate are separated by a gap (1213;1618) filled with air.

23. The display apparatus of claim 1, wherein light modulators in the array of light modulators correspond one-to-one to light-transmissive regions of the plurality of light-transmissive regions.

24. The display apparatus of claim 1, wherein the array is separated from the first reflective surface by a gap, which is less than or equal to about 100 µm wide, preferably less than or equal to about 10 µm wide.

25. The display apparatus of claim 1, comprising a spacer for keeping the array at about a predetermined distance from the first reflective surface, thereby forming a gap.

26. The display apparatus of claim 1, comprising a fluid at least partially filling a gap maintained between the first reflective surface and the array.

27. The display apparatus of claim 26, wherein the fluid comprises a liquid, preferably a lubricant.

28. The display apparatus of claim 27, wherein the light modulators comprise mechanical MEMS light modulators and the liquid at least partially surrounds the mechanical MEMS light modulators

29. The display apparatus of claim 1, comprising a cover plate (1108) separated from the first substrate by a gap.

30. The display apparatus of claim 29, wherein the array (1602) is formed on a side of the substrate cover plate on a side of the cover plate facing away from a front of the display apparatus.

31. The display apparatus of claim 1, wherein at least one of the light-transmissive regions has a filter.

32. A method of forming the image comprising modulating light using the light modulators of a display according to any preceding claim.

## Patentansprüche

1. Anzeige, die Folgendes umfasst: eine erste reflektierende Oberfläche, eine zweite reflektierende Oberfläche (1212"), die zumindest teilweise der ersten reflektierenden Oberfläche gegenüberliegt und Licht in Richtung der ersten reflektierenden Oberfläche reflektiert, wobei die erste und zweite Oberfläche eine optische Kavität bilden (1202"), einen Lichtleiter (1208") und eine Anordnung von Lichtmodulatoren (1206"), wobei die Anzeige **dadurch gekennzeichnet ist, dass**:
die erste reflektierende Oberfläche eine Vielzahl von lichtdurchlässigen Bereichen (1222') definiert, die seitlich durch reflektierende Bereiche getrennt sind,
der Lichtleiter (1208") innerhalb der Kavität (1202") positioniert ist, um Licht (1214) im Wesentlichen in der gesamten Kavität (1202") zu verteilen, und
die Anordnung von Lichtmodulatoren (1206") selektiv Licht fernhält, das den Lichtleiter in Richtung einer Vorderseite der Anzeige durch die Vielzahl von lichtdurchlässigen Bereichen verlässt, und dass Lichtmodulatoren in der Anordnung von Lichtmodulatoren den jeweiligen lichtdurchlässigen Bereichen der Vielzahl von lichtdurchlässigen Bereichen entsprechen.

2. Anzeige nach Anspruch 1, worin eine der reflektierenden Oberflächen aus einem der Folgenden gebildet ist: einem Spiegel, einem dielektrischen Spiegel und einem metallischen Film.

3. Anzeige nach Anspruch 1, worin mindestens einer der lichtdurchlässigen Bereiche eine Durchlassöffnung umfasst.

4. Anzeige nach Anspruch 1, worin die Anordnung von Lichtmodulatoren eines von Folgenden umfasst: eine Vielzahl von MEMS-basierten Lichtmodulatoren oder eine Vielzahl von MEMS-basierten Verschlusseinheiten.

5. Anzeige nach Anspruch 1, worin die erste reflektierende Oberfläche im Wesentlichen parallel zur zweiten reflektierenden Oberfläche ist und der zweiten reflektierenden Oberfläche gegenüberliegt.

6. Anzeige nach Anspruch 1, worin die erste reflektierende Oberfläche zumindest teilweise quer bezüglich der zweiten reflektierenden Oberfläche verläuft.

7. Anzeige nach Anspruch 1, worin die Anordnung von Lichtmodulatoren eine Vielzahl von Verschlüssen umfasst, die in einer Ebene angeordnet sind, wobei mindestens einer der Verschlüsse eine erste Position im Wesentlichen in der Ebene, die den Durchgang von Licht durch einen entsprechenden der Vielzahl von lichtdurchlässigen Bereichen erlaubt, und eine zweite Position im Wesentlichen in der Ebene, um Licht fern zu halten, das von der zweiten reflektierenden Oberfläche reflektiert wird, hat.

8. Anzeige nach Anspruch 1, worin die Anordnung von Lichtmodulatoren eine Vielzahl von Verschlüssen umfasst, die in einer Ebene angeordnet sind, wobei mindestens einer der Verschlüsse eine erste Position im Wesentlichen in der Ebene, um Licht fern zu halten, das von der zweiten reflektierenden Oberfläche reflektiert wird, und eine zweite Position, in der zumindest ein Teil des Verschlusses im Wesentlichen außerhalb der Ebene liegt, um den Durchgang von Licht durch den entsprechenden der Vielzahl von lichtdurchlässigen Bereichen zu erlauben, hat.

9. Anzeige nach Anspruch 1, worin die erste reflektierende Oberfläche auf der Oberfläche des Lichtleiters angeordnet ist.

10. Anzeige nach Anspruch 9, die ein Substrat umfasst, an dem die Anordnung von Lichtmodulatoren angeordnet ist.

11. Anzeige nach Anspruch 10, worin das Substrat im Wesentlichen transparent ist.

12. Anzeige nach Anspruch 10, die einen Abstandhalter umfasst, um den Lichtleiter und das Substrat in einem vorbestimmten Abstand voneinander zu halten, wodurch ein Zwischenraum gebildet wird.

13. Anzeige nach Anspruch 10, worin der Lichtleiter mit dem Substrat verbunden ist.

14. Anzeige nach Anspruch 1, die ein Substrat umfasst, auf dem die erste reflektierende Oberfläche und die Anordnung von Lichtmodulatoren angeordnet sind.

15. Anzeige nach Anspruch 14, worin die erste reflektierende Oberfläche einen reflektierenden Film umfasst.

16. Anzeige nach Anspruch 1, worin die zweite reflektierende Oberfläche an einer Seite des Lichtleiters angeordnet ist, die einer Seite des Lichtleiters, die der ersten reflektierenden Oberfläche am nächsten liegt, gegenüberliegt.

17. Anzeige nach Anspruch 1, worin die Anordnung von Lichtmodulatoren Flüssigkristallkomponenten umfasst.

18. Anzeige nach Anspruch 1, die eine Lichtquelle (1208") umfasst, um Licht in den Lichtleiter einzuführen.

19. Anzeige nach Anspruch 18, worin die Lichtquelle eine Leuchtdiode umfasst.

20. Anzeige nach Anspruch 18, worin die Lichtquelle eine Vielzahl von Lichtquellen umfasst, von denen jede eine von mindestens drei Farben des Lichts emittiert.

21. Anzeige nach Anspruch 1, die ein Substrat (1210; 1610) umfasst, das vom Lichtleiter (1208; 1614) getrennt ist, auf dem die erste reflektierende Schicht angeordnet ist.

22. Anzeige nach Anspruch 21, worin der Lichtleiter und das Substrat durch einen Zwischenraum (1213; 1618), der mit Luft gefiillt ist, getrennt sind.

23. Anzeigegerät nach Anspruch 1, worin Lichtmodulatoren in der Anordnung von Lichtmodulatoren in der Eins-zu-eins-Weise lichtdurchlässigen Bereichen der Vielzahl von lichtdurchlässigen Bereichen entsprechen.

24. Anzeigegerät nach Anspruch 1, worin die Anordnung von der ersten reflektierenden Oberfläche durch einen Zwischenraum getrennt ist, der kleiner als oder gleich etwa 100 µm breit, bevorzugt kleiner als oder gleich etwa 10 µm breit ist.

25. Anzeigegerät nach Anspruch 1, das einen Abstandhalter umfasst, um die Anordnung in etwa einem vorbestimmten Abstand von der ersten reflektierenden Oberfläche zu halten, wodurch ein Zwischenraum gebildet wird.

26. Anzeigegerät nach Anspruch 1, das ein Fluid umfasst, das zumindest teilweise einen Zwischenraum fiillt, der zwischen der ersten reflektierenden Oberfläche und der Anordnung erhalten wurde.

27. Anzeigegerät nach Anspruch 26, worin das Fluid eine Flüssigkeit umfasst, bevorzugt ein Gleitmittel.

28. Anzeigegerät nach Anspruch 27, worin die Lichtmodulatoren mechanische MEMS-Lichtmodulatoren umfassen und die Flüssigkeit zumindest teilweise die mechanischen MEMS-Lichtmodulatoren umgibt.

29. Anzeigegerät nach Anspruch 1, das eine Deckplatte (1108) umfasst, die vom ersten Substrat durch einen Zwischenraum getrennt ist.

30. Anzeigegerät nach Anspruch 29, worin die Anordnung (1602) auf einer Seite der Substratdeckplatte auf einer Seite der Deckplatte gebildet wird, die einer Vorderseite des Anzeigegeräts abgewandt ist.

31. Anzeigegerät nach Anspruch 1, worin mindestens einer der lichtdurchlässigen Bereiche einen Filter aufweist.

32. Verfahren zur Erzeugung des Bilds, das das Modulieren von Licht unter Verwendung der Lichtmodulatoren einer Anzeige nach einem vorstehenden Anspruch umfasst.

## Revendications

1. Afficheur comprenant une première surface réfléchissante, une deuxième surface réfléchissante (1212"), faisant face au moins en partie à la première surface réfléchissante et réfléchissant la lumière vers la première surface réfléchissante, la première et la deuxième surfaces formant une cavité optique (1202"), un guide de lumière (1208") et un réseau de modulateurs de lumière (1206"), l'afficheur étant **caractérisé en ce que** :
la première surface réfléchissante délimite une pluralité de zones de transmission de lumière (1222') séparées latéralement par des zones réfléchissantes,
le guide de lumière (1208") est placé à l'intérieur de la cavité (1202") pour distribuer la lumière (1214) dans sensiblement l'ensemble de la cavité (1202"), et
le réseau de modulateurs de lumière (1206") bloquent sélectivement la lumière partant du guide de lumière vers un devant de l'afficheur à travers la pluralité de zones de transmission de lumière, et **en ce que** les modulateurs de lumière dans le réseau de modulateurs de lumière correspondent à des zones respectives de transmission de lumière de la pluralité de zones de transmission de lumière.

2. Afficheur conforme à la revendication 1, où l'une des surfaces réfléchissantes est formée par un d'un miroir, un miroir diélectrique et un film métallique.

3. Afficheur conforme à la revendication 1, où au moins une des zones de transmission de lumière comprend une ouverture.

4. Afficheur conforme à la revendication 1, où le réseau de modulateurs de lumière comprend un de : une pluralité de modulateurs de lumière à Mems ou une pluralité d'ensembles de volets à Mems.

5. Afficheur conforme à la revendication 1, où la première surface réfléchissante est sensiblement parallèle à et opposée à la deuxième surface réfléchissante.

6. Afficheur conforme à la revendication 1, où la première surface réfléchissante est au moins en partie transversale à la deuxième surface réfléchissante.

7. Afficheur conforme à la revendication 1, où le réseau de modulateurs de lumière comprend une pluralité de volets disposés dans un plan, au moins un des volets ayant une première position sensiblement dans le plan permettant le passage de la lumière à travers une correspondante de la pluralité de zones de transmission de lumière et une deuxième position sensiblement dans le plan pour bloquer la lumière réfléchie par la deuxième surface réfléchissante.

8. Afficheur conforme à la revendication 1, où le réseau de modulateurs de lumière comprend une pluralité de volets disposés dans un plan, au moins un des volets ayant une première position sensiblement dans le plan pour bloquer la lumière réfléchie par la deuxième surface réfléchissante et une deuxième position dans laquelle au moins une partie du volet est sensiblement écartée du plan pour permettre le passage de la lumière à travers la zone correspondante de la pluralité de zones de transmission de lumière

9. Afficheur conforme à la revendication 1, où la première surface réfléchissante est disposée à la surface du guide de lumière.

10. Afficheur conforme à la revendication 9, comprenant un substrat sur lequel est disposé le réseau de modulateurs de lumière.

11. Afficheur conforme à la revendication 10, où le substrat est sensiblement transparent.

12. Afficheur conforme à la revendication 10, comprenant un espaceur pour maintenir le guide de lumière et le substrat à une distance prédéterminée l'un de l'autre, formant ainsi un écartement.

13. Afficheur conforme à la revendication 10, où le guide de lumière est accouplé au substrat.

14. Afficheur conforme à la revendication 1, comprenant un substrat sur lequel sont disposés la première surface réfléchissante et le réseau de modulateurs de lumière.

15. Afficheur conforme à la revendication 14, où la première surface réfléchissante comprend une pellicule réfléchissante.

16. Afficheur conforme à la revendication 1, où la deuxième surface réfléchissante est disposée sur un côté du guide de lumière qui est opposé à un côté du guide de lumière le plus proche de la première surface réfléchissante.

17. Afficheur conforme à la revendication 1, où le réseau de modulateurs de lumière comprend des composants à cristaux liquides.

18. Afficheur conforme à la revendication 1, comprenant une source lumineuse (1208") pour introduire de la lumière dans le guide de lumière.

19. Afficheur conforme à la revendication 18, où la source lumineuse comprend une diode électroluminescente.

20. Afficheur conforme à la revendication 18, où la source lumineuse comprend une pluralité de sources lumineuses, chacune émettant une d'au moins trois couleurs de lumière.

21. Afficheur conforme à la revendication 1, comprenant un substrat (1210; 1610) séparé du guide de lumière (1208; 1614), sur lequel la première couche réfléchissante est disposée.

22. Afficheur conforme à la revendication 21, où le guide de lumière et le substrat sont séparés par un écartement (1213; 1618) rempli d'air.

23. Dispositif afficheur conforme à la revendication 1, où les modulateurs de lumière dans le réseau de modulateurs de lumière correspondent de un pour une à des zones de transmission de lumière de la pluralité de zones de transmission de lumière.

24. Dispositif afficheur conforme à la revendication 1, où le réseau est séparé de la première surface réfléchissante par un écartement, dont la largeur est inférieure ou égale à environ 100 µm, et de préférence inférieure ou égale à environ 10 µm.

25. Dispositif afficheur conforme à la revendication 1, comprenant un espaceur pour maintenir le réseau à une distance approximative prédéterminée de la première surface réfléchissante, ce qui forme un écartement.

26. Dispositif afficheur conforme à la revendication 1, comprenant un fluide remplissant au moins en partie un écartement maintenu entre la première surface réfléchissante et le réseau.

27. Dispositif afficheur conforme à la revendication 26, où le fluide comprend un liquide, de préférence un lubrifiant.

28. Dispositif afficheur conforme à la revendication 27, où les modulateurs de lumière comprennent des modulateurs de lumière mécaniques à Mems et où le liquide entoure au moins en partie les modulateurs de lumière mécaniques à Mems.

29. Dispositif afficheur conforme à la revendication 1, comprenant une plaque de couverture (1108) séparée du premier substrat par un écartement.

30. Dispositif afficheur conforme à la revendication 29, où le réseau (1602) est formé sur un côté de la plaque de couverture du substrat sur un côté de la plaque de couverture tournant le dos à un devant du dispositif afficheur.

31. Dispositif afficheur conforme à la revendication 1, où au moins une des zones de transmission de lumière est munie d'un filtre.

32. Procédé de formation de l'image comprenant la modulation de la lumière à l'aide des modulateurs de lumière d'un afficheur conforme à une quelconque des revendications précédentes.
